(19) **Europäisches Patentamt**

**European Patent Office**

**Office européen des brevets**

(11) **EP 0 817 980 B1**

(12) **EUROPÄISCHE PATENTSCHRIFT**

(45) Veröffentlichungstag und Bekanntmachung des Hinweises auf die Patenterteilung:
**09.07.2003 Patentblatt 2003/28**

(51) Int Cl.[7]: **G02B 6/28**, G02F 1/225, G02F 1/313

(21) Anmeldenummer: **96900818.4**

(22) Anmeldetag: **29.01.1996**

(86) Internationale Anmeldenummer:
**PCT/CH96/00035**

(87) Internationale Veröffentlichungsnummer:
**WO 96/024080 (08.08.1996 Gazette 1996/36)**

(54) **KOMPAKTE OPTISCH-OPTISCHE SCHALTER UND WELLENLÄNGEN-KONVERTER MITTELS MULTIMODE-INTERFERENZ MODEN-KONVERTERN**

COMPACT OPTICAL-OPTICAL SWITCHES AND WAVELENGTH CONVERTERS BY MEANS OF MULTIMODE INTERFERENCE MODE CONVERTERS

COMMUTATEUR COMPACT OPTIQUE-OPTIQUE ET CONVERTISSEUR DE LONGUEURS D'ONDE AU MOYEN DE CONVERTISSEURS DE MODES D'INTERFERENCES MULTIMODES

(84) Benannte Vertragsstaaten:
**CH DE DK FR GB IT LI SE**

(30) Priorität: **01.02.1995 CH 26695**
**01.02.1995 CH 31995**
**22.02.1995 CH 50895**
**25.07.1995 CH 217795**

(43) Veröffentlichungstag der Anmeldung:
**14.01.1998 Patentblatt 1998/03**

(73) Patentinhaber: **Leuthold, Jürg**
**9126 Necker (CH)**

(72) Erfinder:
• **LEUTHOLD, Jürg**
**CH-9126 Necker (CH)**
• **BESSE, Pierre-André**
**CH-1020 Renens (CH)**
• **BACHMANN, Maurus**
**CH-8617 Mönchaltdorf (CH)**

(74) Vertreter: **Patentanwälte Feldmann & Partner AG**
**Kanalstrasse 17**
**8152 Glattbrugg (CH)**

(56) Entgegenhaltungen:
EP-A- 0 374 006    EP-A- 0 597 472
EP-A- 0 632 313

• **APPLIED OPTICS, 20 JUNE 1994, USA, Bd. 33, Nr. 18, ISSN 0003-6935, Seiten 3905-3911, XP000454730 BACHMANN M ET AL: "General self-imaging properties in N*N multimode interference couplers including phase relations" in der Anmeldung erwähnt**
• **20TH EUROPEAN CONFERENCE ON OPTICAL COMMUNICATION, PROCEEDINGS, Bd. 2, 25. - 29.September 1994, FIRENZE, IT, Seiten 669-672, XP002001984 P.A.BESSE ET AL: "New 1x2 Multi-Mode Interference Couplers with Free Selection of Power Splitting Ratios" in der Anmeldung erwähnt**
• **20TH EUROPEAN CONFERENCE ON OPTICAL COMMUNICATION, PROCEEDINGS, Bd. 2, 25. - 29.September 1994, FIRENZE, IT, Seiten 519-522, XP002001985 M.BACHMANN ET AL: "Compact Polarization-insensitive Multi-Leg 1x4 Mach-Zehnder Switch in InGaAsP/InP" in der Anmeldung erwähnt**
• **APPLIED OPTICS, 20 OCT. 1995, USA, Bd. 34, Nr. 30, ISSN 0003-6935, Seiten 6898-6910, XP000534308 BACHMANN M ET AL: "Overlapping-image multimode interference couplers with a reduced number of self-images for uniform and nonuniform power splitting"**
• **INTERNATIONAL SYMPOSIUM ON GUIDED WAVE OPTOELECTRONICS, 1.Januar 1994, Seiten 187-196, XP000567432 KRIJNEN G J M ET AL: "MODELLING OF A VERSATILE ALL-OPTICAL MACH-ZEHNDER SWITCH" in der Anmeldung erwähnt**

**Beschreibung**

**Technisches Gebiet**

Die Erfindung liegt auf dem Gebiet der integrierten Optik und der Telekommunikation. Die Erfindung betrifft kompakte Optisch-Optische Schalter und Wellenlängen-Konverter mit guten On/Off-Schaltverhältnissen. Optisch-Optische Schalter arbeiten mit mindestens zwei optischen Signalen. Zur Einkopplung von denselben werden neue Multimode-Interferenz (MMI) Koppler angewendet, die mindestens ein Signal in einen Moden höherer Ordnung konvertieren können und ein anderes Signal als Grundmode mit den ersten Signalen superponieren können. Diese MMIs sind sehr kompakt.

**Stand der Technik**

In der optischen Telekommunikation werden optische Signale via Glasfaserkabel übermittelt. Die optische Signalverarbeitung findet häufig auf integriert optischen Chips statt. Diese Chips bestehen z.B. aus Polymeren, dünnen Filmen von Halbleitermaterialien, glashaltigen Materialien, .... Auf diesen Chips wird das Licht in Wellenleitern geführt [1]. Nur jenes Licht, das auch die Randbedingungen des Wellenleiters und die Maxwell-Gleichungen erfüllt, wird geführt. Man bezeichnet die verschiedenen erlaubten, diskreten Zustände des Lichts im Wellenleiter als optische Moden. Je nach der Geometrie der Intensitätsverteilung und der Phasenverteilung innerhalb des Mode ordnet man diesem eine andere Ordnung zu. Man spricht von Grundmoden. Moden erster Ordnung, . . ..

Eine Klasse von Wellenleiterstrukturen ist unter dem Namen Multi-Mode-Interferometer (MMI) bekannt. Diese MMIs bieten in Bezug auf die optische Signalverarbeitung viele Möglichkeiten. Unter anderem werden MMIs als optische Lichtteiler und -Kombinierer [2], als Lichtteiler mit variablen Teilverhältnissen, sogenannten "Butterfly"-MMIs [3], und als "Multileg"-MMIs [4] angewendet.

Neue Anwendungen in der integrierten Optik machen von Moden höherer Ordnung Gebrauch. Modenkonverter wandeln Grundmoden in Moden höherer Ordnung um und erlauben zugleich die Superposition des Mode höherer Ordnung mit einem weiteren Grundmode. Modenkonverter werden als adiabatische antisymmetrische Y-Vereiniger [6] in 2x2 Digital-Optischen Schaltern [7] und in Mach-Zehnder Interferometern (MZI) [6] verwendet.

Moden höherer Ordnung haben auch attraktive Anwendungen in schnellen optischen Schaltern und Wellenlängen-Konvertern und zwar in sogenannten optisch-optischen Bauteilen. Im speziellen wurde bereits gezeigt, dass Kreuz-Phasen-Modulierte (XPM) Optisch-Optische Schalter und Wellenlängenkonverter Schaltzyklen. weit über 1 GBit [8] ermöglichen. Dabei werden zwei optische Signale (deshalb Optisch-Optisch) benötigt. Auf der einen Seite das zu schaltende Eingangs-Signal im Schalter respektive das Signal mit der Zielwellenlänge im Konverter und auf der andern Seite ein optisches Kontroll-Signal, das den Takt gibt. Diese Signale werden auf ein Mach-Zehnder-Interferometer (MZI) oder Michelson-Interferometer (MI) geführt, das zur Phasenmodulation nichtlineare Materialien (z.B. Halbleiterlaser-Verstärker. etc.. . . .) enthält. Je nachdem, ob das Kontroll-Signal anwesend ist oder nicht, wird im MZI die Phase des Eingangssignals moduliert. Da die Phase nur auf einem Interferometer-Arm verschoben werden soll, muss die Konfiguration grundsätzlich eine Asymmetrie enthalten [9].
Verschiedene Lösungsansätze zur Erzeugung dieser Asymmetrie wurden vorgeschlagen. Nebst andern wurden folgende Bauteile demonstriert oder vorgeschlagen:

- Wellenlängen-Konverter mit asymmetrischer Aufspaltung des Eingangssignals in das MZI [10]. Als Signal-Teiler wurden dabei sogenannte "Directional Couplers" verwendet.
- Optisch-Optischer Schalter mit einem Signalausgang zum An- und Abschalten [11]. Das Eingangssignal wird symmetrisch auf das MZI mit dem nichtlinearen Teilstück geführt, hingegen wird das Kontroll-Signal asymmetrisch mittels eines Lichtmischers auf einen Arm des MZI geführt. Das Kontroll Signal wurde dabei mittels adiabatischen asymmetrischen Y-Verzweigungen in einen Mode erster Ordnung (Mode höherer Ordnung) konvertiert.

Die Ideen auf denen diese Bauteile beruhen sind sehr vielversprechend. Leider aber weisen sowohl die Bauteile zur Erzeugung des Mode höherer Ordnung als auch die optisch-optischen Komponenten einige ungünstige Eigenschaften auf:

- Obwohl die Konversion in einen Mode höherer Ordnung und die gleichzeitige Superposition mit einem weiteren optischen Signal mittels adiabatischen antisymmetrischen Y-Vereinigern recht gut funktioniert, befriedigen die grosse Länge und die Tatsache, dass die Fabrikations-Toleranzen kritisch sind nicht.
- Ferner wäre es wünschenswert, wenn man Schalter mit guten On/Off-Schaltverhältnisse hätte. Gerade dazu eignen sich die obigen Strukturen nicht, weil sie die Intensitätsänderung, die mit dem Phasenshift einhergeht nicht berücksichtigen. Diese Intensitätsänderung führt aber, wenn man sie nicht berücksichtigt zu schlechten Schaltzuständen, d. h. zu schlechten On/Off-Schaltverhältnissen auf mindestens 1 der beiden Ausgänge.

- Da obige Schalter das Kontroll- und das Datensignal am Ein- oder auch Ausgang nicht auf verschiedenen Wellenleitern führen, lassen sich die Bauteile nur schlecht auf einem einzigen Chip kaskadieren. Auch ein Bidirectionaler Betrieb ist schwierig, weil das Kontroll-Signal einen Ausgang des Schalters stört.
- Es gibt Anwendungen, wo kompakte Optisch-Optische Schalter benötigt werden. Neue kürzere Konfigurationen wären nützlich.

Ein weiteres Problem betrifft die Ladungsträger-Rekombinationszeit. Diese limitiert die Schaltgeschwindigkeit der Optisch-Optischen Schalter. Ein starkes Kontroll-Signal kann die Ladungsträger in einem nichtlinearen Bereich eines MZI-Arm so stark reduzieren, dass der nichtlineare Bereich beim nachfolgenden Signal noch eine reduzierte Ladungsträgerkonzentration hat und nur schlecht in den Grundzustand zurückschaltet. Dieses Problem kann umgangen werden durch das Einführen eines zeitlich versetzten zweiten Kontroll-Signals in den andern Arm, so dass die nichtlinearen Bereiche symmetrisch entleert werden. Anstatt das Kontroll-Signal zeitlich zu versetzen kann man auch die 2 nichtlinearen Bereiche auf den 2 MZI-Armen gegeneineander örtlich versetzen, was den gleichen Effekt hat [12]. Falls es jedoch gelingt, die beiden Signale einer MZI-Konfiguration zeitlich verschoben auf den gleichen nichtlinearen Bereich zu führen und mit dem Kontroll-Signal bevor das zweite Signal oder während das zweite Signal im nichtlinearen Bereich ist zu schalten, und danach wieder zu trennen und zur Interferenz zu bringen.
so erübrigt sich das Problem mit den verschieden entleerten nichtlinearen Bereichen. In der Referenz [13] wurde eine polarisationsabhängige Lösung vorgeschlagen. Neuartige Schalter sollten jedoch polarisationsunabhängig sein.

[1] T. Tamir:"Integrated Optics", Topics in Applied Physics vol. 7, Springer Verlag 2nd Edition, 1985, ISBN 0-387-09673-6
[2] M. Bachmann, M. K. Smit, P. A. Besse, E. Gini, H. Melchior, and L. B. Soldano, " Polarization-insensitive low-voltage optical waveguide switch using InGaAsP/InP four-port Mach-Zehnder interferometer," in Tech. Dig. OFCI IOOC'93, San. Jose, CA., Feb. 1993, pp. 32-33
[3] P.A. Besse, E. Gini, M. Bachmann, H. Melchior, "New 1x2 Multi-Mode Interference Couplers with Freee Selection of Power Splitting Ratios", ECOC 1994, Sept 25-29 1994, Firenze.
[4] M. Bachmann, Ch. Nadler, P.A. Besse and H. Melchior, "Compact Polarization-Insensitive Multi-Leg 1x4 Mach-Zehnder Switch in InGaAsP/InP", ECOC 1994, Sept 25-29 1994, Firenze.
[5] J. Deri, et al., IEEE Photon. Technol. Lett., vol. 4, pp. 1238-1240, Nov. 1992.
[6] W.K. Burns and A.F. Milton:"Mode Conversion in Planar Dielectric Separating Waveguides", IEEE J. Quantum Electron., Vol. QE-11, no. 1, pp. 32-39, 1975
[7] Y. Silberberg, et al. Appl. Phys. Lett., Vol. 51, pp. 3905-3911, July 1994
[8] R.E. Stubkjaer, et al., "Optical Wavelength Converters", ECOC 1994, Sept. 25-29. 1994, Firenze, p. 635 ff.;
[9] T. Durhuus, et. al.,"All Optical Wavelength Conversion by SOA's in a Mach-Zehnder Configuration" IEEE Photonics Technology Letters, Vol. 6. Nol 1. Jan. 94; p. 53 ff.;
[10] V. Vodjdani, et al.; "All Optical Wavelength Conversion at 5 Gbit/s with Monolithic Integration of Semiconductor Optical Amplifers in a Passive Asymmetric MZI"; ECOC 1994, Sept. 25-29. 1994, Firenze, p. 95 ff.;
[11] G.J.M. Krijnen, et al.; "Modelling of a versatile all-optical Mach-Zehnder swicht"; Intern. Symposium on Guided-Wave Optoelectronics, Oct. 26-28, 1994, Brooklyn; paper VII.6;
[12] K.I.Kang, et al., "Demonstration of ultrafast, all-opitcal, low control energy, single wavelength, polarization independent, cascadable and integratable switch"; Appl. Phys. Lett. 67 (5), July 95, p. 605-607
[13] K. Tajima et. al.; "Ultrafast polarization-dicriminating Mach-Zehnder all-optical switch"; Appl. Phys. Lett 67, Dez. 1995, p. 3709-3711

**Darstellung der Erfindung**

Es ist Aufgabe der Erfindung,
Neue, kompakte, mit guten Toleranzen herstellbare Optisch-Optische Schalter und/oder Wellenlängen-Konverter zu finden, die alle oder einige der folgenden Eigenschaften aufweisen:

- kompakt
- gute On/Off-Schaltverhältnisse
- Kaskadierbarkeit und bidirektionaler Betrieb möglich
- polarisations-unabhängig realisierbar
- sehr schnelles Schalten möglich

Bauteile sind zuerst zu entwickeln, die Gebrauch von verschiedenen Ordnungsmoden machen, um das Informations-Signal und das Kontroll-Signal zu mischen oder von einander zu trennen. D.h. Bauteile, die einerseits die optische Modenkonversion von einem Grundmode in einen oder mehrere Moden höherer Ordnung und andererseits die Superposition der konvertierten Moden mit weiteren optischen Signalen mit kompakten Bauteilen gestatten.

Dann sind Verfahren zur Erzielung der guten On/Off Schaltverhältnisse zu finden, damit gute Schalter überhaupt möglich werden.

Es wird zudem auch ein alternatives Verfahren für Optisch-Optische Schalter und Wellenlängen-Konverter entwickelt, die von den erfindungsgemässen optischen Modekonverter keinen Gebrauch machen, aber dennoch einige oder alle obiger Eigenschaften aufweisen.

Erfindungsgemäss wird die Aufgabe durch die in den Ansprüchen definerten Bauteile, Vorrichtungen und Verfahren gelöst. Die MMIs erlauben die Modenkonversion, Rückkonversion und Superposition mit andern Moden oder die Abbildung von Moden verschiedener Ordnung auf gemeinsame Wellenleiter mit verschiedenen Intensitäten. Damit man die Optisch-Optischen Schalter als Schalter mit 2 guten On/Off-Schaltverhältnissen betreiben kann, werden 2 Asymmetrien in der MZI-Konfiguration eingeführt. Die beiden Asymmetrien werden so gewählt, dass man sowohl die Phase als auch die Intensität in der MZI-Konfiguration kontrollieren kann. Das Verfahren ist allgemeiner anwendbar. Die Vorgeschlagenen Schalter können je nach Anordnung kaskadierbar und bidirektional betrieben werden, weil man mit Moden verschiedener Ordnung arbeitet, die leicht voneinander getrennt werden können. Die Verwendung einer Konfiguration mit 'innern' MZI erlaubt die Konstruktion von kaskadierbaren, bidirektional betreibaren Strukturen, die von obigen MMI keinen Gebrauch machen.

Die Geschwindigkeits-limitierende Ladungsträger-Rekombinationszeit kann z.B. durch ein zweites zeitlich versetztes Kontroll-Signal oder aber durch das Aufteilen eines Mode in Moden verschiedener Ordnung, die nacheinander dieselben nichtlinearen Bereiche durchlaufen gelöst werden. So ist schnelles Schalten möglich.

**Kurze Beschreibung der Zeichnungen**

| | |
|---|---|
| **Fig. 1** | Beispiel eines MMIs das zur Erzeugung eines Mode höherer Ordnung dient. |
| **Fig. 2** | Beispiel einer Allgemeinen MMI-Struktur. die zur Einkopplung zweier Moden auf den gleichen Wellenleiter dient und dabei gleichzeitig mindestens einen Mode auf einen Mode höherer Ordnung konvertiert. |
| **Fig. 3** | MMI mit der erfindungsgemässen Möglichkeit, Grundmoden auf einen oder mehrere Moden der ersten Ordnung und auf Grundmoden abzubilden. |
| **Fig. 4** | Aufbauprinzip des "General (3K)x(3K)-MMI-Converter-Combiners". a) Spezialfall K=1 b) Spezialfall K=2. |
| **Fig. 5** | Aufbauprinzip des "General (4K)x(4K)-MMI-Converter-Combiners". a) Spezialfall K=1 b) Spezialfall K=2. |
| **Fig. 6** | Aufbauprinzip des "MMI-Converter-Combiners" Variante 1. |
| **Fig. 7** | Aufbauprinzip des "MMI-Converter-Combiners" Variante 2 |
| **Fig. 8** | Aufbauprinzip des "MMI-Converter-Combiners" Variante 3. |
| **Fig. 9** | Beispiel für das Aufbauprinzip eines MMIs das es erlaubt zwei Moden verschiedener Symmetrie (hier: Grundmode und Mode erster Ordnung) mit verschiedenen Teilverhältnissen auf $K$ Ausgänge abzubilden. In diesem Beispiel wurden die Eingangspositionen für die Wellenleiter am MMI so gewählt, dass sowohl der Grundmode als auch der Mode erster Ordnung am gleichen Ausgang jeweils identische Teilverhältnisse aufweisen. Würde man beispielsweise in diesem Beispiel K=2 wählen, so wären die Teilverhältnisse an den Ausgängen sowohl für den ersten Ordnungsmode als auch für den Grundmode 15:85 |
| **Fig.10** | .Beispiel eines Optisch-Optischen Schalters mit 2 möglichen Ausgängen respektive Wellenlängenkonverters, der das Kontroll-Signal in einem "MMI-Converter-Combiner" in einen Mode erster Ordnung konvertiert und gleichzeitig auf einen Wellenleiterarm des MZI führt. |
| **Fig. 11** | Beispiel eines Optisch-Optischen Schalters mit 1 Ausgang respektive eines Wellenlängenkonverters, der nach dem Prinzip der Kreuz-Phasen-Modulation (XPM) arbeitet und die Einkopplung und Konvertierung des Kontroll-Signals via Converter-Combiner-MMI erlaubt. Diese reflektierende MZI Struktur wird auch als MI-Konfiguration bezeichnet. |
| **Fig. 12** | Beispiel eines XPM-Optisch-Optischen Schalters mit 2 möglichen Ausgängen, der zur Ein- und Auskopplung des Eingangssignals B identische "Butter-fly"-MMI 131 und 132, *als* asymmetrische Moden-Koppler verwendet. Zur Einkopplung des Kontroll-Signals werden MMI-Converter-Combiner 133 und 137 verwendet |
| **Fig. 13** | Beispiel eines XPM-Optisch-Optischen Schalters mit 2 möglichen Ausgängen. der zur Ein- und Auskopplung des Eingangssignals B je verschiedene "Butterfly"-MMIs, als asymmetrische Moden-Koppler 141 und 142 verwendet und zur Einkopplung des Kontroll-Signals MMI-Converter-Combiner 143 und 146 verwendet. |
| **Fig. 14** | Beispiel zur Einkopplung und Konvertierung des Kontroll-Signals in einen Mode erster Ordnung. in einen XPM-Optisch-Optischen Schalter mit 2 möglichen Ausgängen, mittels eines "3x3-MMI-Converter-Combiners", Fig. 4a). |

Fig. 15    Allgemeiner XPM-Optisch-Optischer Schalter mit 2 Ausgängen mit guten On/Off-Schaltverhältnissen. Bei den Kopplern 161 und 162 handelt es sich um "Butterfly"-MMI mit ungefähr reziproken oder identischen Teilverhältnissen fiir die Signal-Intensitäten. Der mittlere Teil 163 repräsentiert verschieden Aufbaumöglichkeiten für die Ein- und Auskopplung des Kontroll-Signals, den nichtlinearen Bereich und die Phasen-Shifter.

Fig. 16    XPM-Optisch-Optischer Schalter mit 2 Ausgängen mit verbesserten On/Off-Schaltverhältnissen. 2 verschieden grosse nichtlineare Bereiche im Bereich 173 und 174 kennzeichnen die Schalter. Der Moden-Koppler 171 ist ein 1x2-MMI und der Moden-Koppler 172 ist ein 2x2-MMI.

Fig. 17    Beispiel eines Optisch-Optischen Schalters, der nur Grundmoden benutzt und aus einem "äusseren" MZI und "inneren" MZI besteht, so dass das Signal B und das Kontroll-Signal A auch am Ausgang gut getrennt sind.

Fig. 18    XPM-Optisch-Optischer Schalter analog zu Fig. 17. Als Moden-Koppler 171 und 172 werden "Butterfly"-MMI mit ungefähr reziproken oder identischen Teilverhältnissen verwendet, so dass er gute On/Off-Verteilungsverhältnisse aufweist.

Fig. 19    Darstellung des erfindungsgemässen kompakten Optisch-Optischen Schalters, der für die Einkopplung des Signals B und des Kontroll-Signals A nur einen Koppler benötigt und für die Auskopplung derselben auch nur einen Koppler benötigt. 311, 312=4x4-Converter-Combiner-MMI

Fig. 20    Beispiel eines XPM-Optisch-Optischen Schalters, der ein optisches Signal B in 2 durch die Ordnung des Mode unterscheidbare Anteile B' und B" aufspaltet und zeitlich verschoben in den nichtlinearen Bereich 417 führt, so dass das Kontroll-Signal zeitlich so gesendet werden kann, dass nur das zweite Signal B" die Brechungsindexänderung erfährt.

Fig. 21    Beispiel eines XPM-Optisch-Optischen Schalters analog zu Fig. 20, mit 4x4-Converter-Combiner-MMI gemäss Fig. 5a

Fig. 22    Schema eines elektrisch kontrollierten Optischen-Schalters mit guten On/Off-Schaltverhältnissen basierend auf der MZI-Konfiguration gemäss Fig. 15

Fig. 23    Schema eines elektrisch kontrollierten Optischen-Schalters mit guten On/Off-Schaltverhältnissen basierend auf der MZI-Konfiguration gemäss Fig. 16

**Weg zur Ausführung**

Zuerst einige Definitionen von Begriffen, wie sie im Text gebraucht werden:

-    Koppler: allgemeiner Ausdruck für Moden-Teiler und/oder Moden-Vereiniger
-    Moden-Teiler: Bauteil, das zum aufspalten eines oder mehrer optischer Moden in mehrere optische Moden dient. Kann im allgemeinen auch als Moden-Vereiniger gebraucht werden.
-    Moden-Vereiniger: mischt verschiedene Eingangsmoden, je nach Intensitäts- und Phasenbeziehung untereineander auf verschiedene Ausgangswellenleiter Kann im allgemeinen auch als Moden-Teiler gebraucht werden.
-    Moden-Trenner: Bauteile, die Moden verschiedener Ordnung auf je 1 verschiedenen Wellenleiter abbilden.
-    Moden-Filter: Bauteile, die Moden verschiedener Ordnung auf verschiedene Wellenleiter abbilden.
-    Kontroll-Signal: optisches Signal, das genug stark ist um eine Brechungsindex-Aenderung in einem nichtlinearen Material zu erzeugen, die Phase eines ander Signals bemerkbar verändern kann. Je nach Situation, kann das Kontroll-Signal auch als Daten-Signal aufgefasst werden.
-    XPM: Abkz. von "Cross-Phase-Modulation". genauere Spezifizierung für ein Mach-Zehnder Interferometer (MZI) oder Michelson-Interferometer (MI). das mindestens einen Bereich mit einem nichtlinearem Medium aufweist.
-    Schalter mit 2 guten Ausgängen: Ein Schalter, der ein 1 Eingangssignal von einem Eingangswellenleiter mit guten On/Off-Schaltverhältnissen auf 2 Ausgänge abbilden kann. Ohne es im folgenden explizit zu erwähnen, eignen sich solche Schalter auch um Signale von 2 Eingängen mit gutem On/Off-Schaltverhältnis auf 1 Ausgang abzubilden. Dazu könnte man z.B. den Schalter rückwärts betreiben oder einen Schalter mit 2 Eingangswellenleitern verwenden.

Im Vorliegenden beginnen wir mit der Beschreibung der MMI, da sie für die Optisch-Optischen Schalter gebraucht werden und verdeutlichen die Erfindung anhand von Figuren.

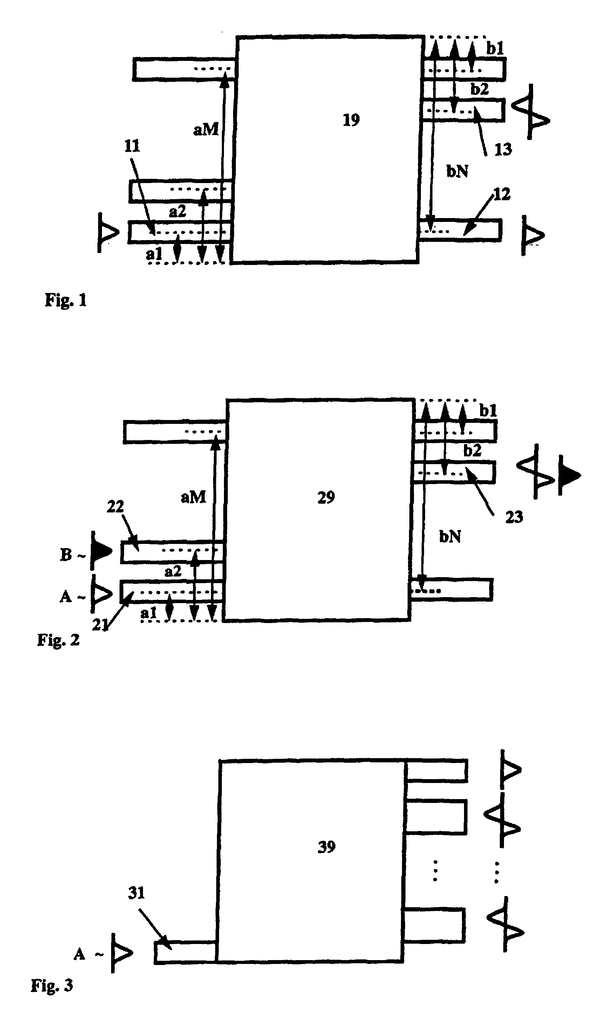

Multi-Mode-Interferometer weisen folgende Bestandteile auf (Fig. 1):

-    mindestens einen Wellenleiter-Eingang 11, der den Eingangsmode führen kann
-    einen Interferenzteil 19 (das MMI selber)
-    Wellenleiter-Ausgänge 12,13, welche die erzeugten Moden führen können.

Der konvertierte Mode (Mode höherer Ordnung) weist zwei Merkmale auf, die für eine Generierung desselben wesentlich sind:

- Der konvertierte Mode hat ein charakteristisches Intensitätsprofil.
- Der konvertierte Mode weist ein charakteristisches Phasenbild auf.

Durch die Wahl von geeigneten Positionen der Wellenleiter-Eingänge und deren Ausgängen sowie der MMI-Geometrie, die z.B. rechteckig, vieleckig,.. sein könnte, kann das Problem der Modenkonversion mit Hilfe der MMI gelöst werden.

Durch die Verwendung von mindestens zwei oder noch mehr Wellenleitereingängen kann man die Aufgabe der Einkopplung zweier oder mehrerer Moden aus verschiedenen Eingängen in denselben Ausgangs-Wellenleiter, bei einer gleichzeitigen Modenkonversion von wenigstens einem Mode mittels MMIs lösen. Es ist also z.B. möglich einen Grund-Mode aus Eingang 21 von Fig. 2 in einen Mode erster Ordnung auf den Ausgang 23 abzubilden und einen ändern Grundmode aus Eingang 22 als Grundmode auf denselben Ausgang 23 abzubilden.

Ausgehend von den obigen allgemeinen Konstruktionen, werden die folgenden speziellen MMI-Strukturen gegeben.

MMI mit der Möglichkeit, symmetrische Moden der Ordnung M (z.B. M=0 für den Grundmode) auf einen oder mehrere Moden der Ordnung 2M+1 (z.B. Grundmoden auf Moden erster Ordnung) und auf Moden der Ordnung M abzubilden. Die Position des Wellenleitereingans für den zu konvertierenden optischen Mode befindet sich am Rand des MMI-Eingangs.

Ein Beispiel für einen solchen "MMI-Converter" wird in Fig. 3 gegeben. Der zu konvertierende Mode (hier beispielsweise ein Grundmode A), wird am Wellenleitereingang ins MMI eingekoppelt. Im rechteckigen MMI dessen Länge mit den aus der Literatur bekannten NxN-MMI (mit ganzen Zahlen $N \geq 3$) übereinstimmt [M. Bachmann, P.A. Besse, and H. Melchior, "General self-imaging properties in NxN multimode interference couplers including phase relations", Applied Optics vol 33. pp. 3905-3911, July 1994], bildet den Mode für ungerade Zahlen von N auf $(N - 1)/2$ respektive für gerade Zahlen $N$ auf $(N-2)/2$ Moden erster Ordnung und 1 respektive 2 Grundmoden ab. In Fig. 3 wurde beispielsweise N ungerade gewählt.

Beschreibung des "General (3K)x(3K)-MMI-Converter-Combiner".

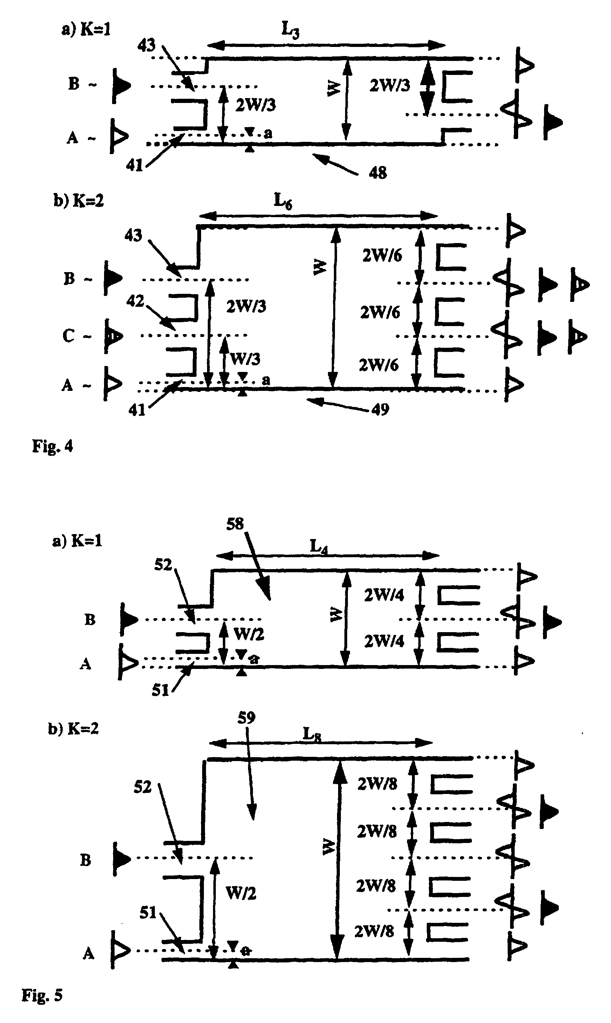

Als Beispiel veranschaulichen die Fig. 4a) und Fig. 4b) die Fälle fiir $K$=1 und $K$=2.

Dieses MMI erlaubt es, einen optischen Grundmode A auf $(3K - 2)/2$ respektive $(3K - 1)/2$ Moden erster Ordnung abzubilden. Es kann also als sehr kompakter Modenkonverter benutzt werden. Die Konversionseffizienz ist dabei für K=1 fast 66%. Zugleich ermöglicht es dieses MMI, einen andern Grundmode B auf $K$ Grundmoden abzubilden und diese mit den Moden erster Ordnung zu überlagern. Damit sind mit dieser Struktur 3 Dinge in einem einzigen kompakten Bauteil realisiert:

1.) Konversion eines Grundmode A in Moden erster Ordnung. 2.) Ueberlagerung der Moden erster Ordnung mit den Bildern eines zweiten Grundmode B. 3.) Das MMI dient gleichzeitig als Moden-Teiler, sowohl für den Grundmode A auf die Moden erster Ordnung als auch für den Grundmode B auf dessen Grundmoden. Der 'General (3K)x(3K)-MMI-Converter-Combiner' ermöglicht die Aufspaltung und Ueberlappung auf genau $K$ MMI-Ausgänge. Die Konversionseffizinenz des Grundmode A in Moden erster Ordnung auf die $K$ Ausgänge, auf denen eine Ueberlappung möglich ist, beträgt theoretisch fast 66%. Jene des Grundmode B auf die $K$ Ausgänge beträgt theoretisch 100%.

Für den Fall der Wahl einer geraden Zahl K, hat dieses Bauteil noch weitere Eigenschaften. Es erlaubt nämlich die Einkopplung eines weitern Grundmode C auf die $K$ Ausgänge, in die auch die Bilder der Moden A und B abgebildet werden. Ein vierter Mode D, der ebenfalls auf einen Mode erster Ordnung abgebildet wird kann ebenfalls über eine separaten Eingang auf diese Ueberlappenden $K$ Ausgänge abgebildet werden. Dessen Konversionseffizienz auf diese Ueberlappenden $K$ Ausgänge beträgt ebenfalls fast 66%.

Die Geometrie des MMI ist bestimmt durch die Angabe der Positionen der Wellenleiter-Eingänge am MMI und der MMI-Geometrie selber. Für eine frei wählbare MMI-Breite W, ergibt sich z.B. für ein rechteckiges MMI eine Länge, die derjenigen des (3K)x(3K)-MMI gemäss [M. Bachmann, P.A. Besse, and H. Melchior, "General self-imaging properties in NxN multimode interference couplers including phase relations". Applied Optics vol 33, pp. 3905-3911, July 1994] entspricht:

$$L_{3K} = \frac{1}{3K} \cdot 3L_c \text{ with } L_c = \frac{4nW^2}{3\lambda} \qquad \text{(Gl. 1)}$$

wobei $K$ eine ganzzahlige Konstante darstellt, n der effektive reale Brechungsindex ist, W die Breite des MMIs gibt, wobei unter Breite die geometrische Breite einschliesslich der Eindringtiefe der Moden im MMI in das benachbarte Material verstanden wird und schliesslich ist λ die Vakuumwellenlänge. Die unter Gl.1 gegebene Länge variiert falls man von der rechteckigen MMI-Form abweicht.

Die Wellenleiter-Eingänge (41) des Mode A, der den Grundmode A führt welcher konvertiert werden soll, liegt an der unteren oder/und an der oberen Kante des MMI. Der frei wählbare Parameter $\alpha$ bestimmt die Form der Intensitätsverteilung des Mode erster Ordnung. Die Positionen der Wellenleiter-Eingänge für die Moden B und C befinden sind in einem Abstand von 2W/3 respektive W/3 von den MMI-Längskanten entfernt.

Des weiteren beschreiben wir den "General (4K)x(4K)-MMI-Converter-Combiner". Als Beispiel veranschaulichen die Fig. 5a) und Fig. 5b) die Fälle für K=1 und K=2.

Dieses MMI erlaubt es einen optischen Grundmode A auf 2$K$ - 1 Moden erster Ordnung abzubilden. Es kann also als weitere Variante eines sehr kompakten Modenkonverters benutzt werden. Die Konversionseffizienz ist dabei für K=1 fast 50%.

Zugleich ermöglicht es dieses MMI, einen andern Grundmode B auf $K$ Grundmoden abzubilden und diese mit Moden erster Ordnung zu überlagern. Damit sind mit dieser Struktur 3 Dinge in einem einzigen kompakten Bauteil realisiert: 1.) Konversion eines Grundmode A in Moden erster Ordnung. 2.) Ueberlagerung der Moden erster Ordnung mit den Bildern eines zweiten Grundmode B. 3.) Das MMI dient gleichzeitig als Moden-Teiler, sowohl für den Grundmode A auf die Moden erster Ordnung als auch für den Grundmode B auf dessen Grundmoden. Der 'General (4K)x(4K)-MMI-Converter-Combiner' ermöglicht die Aufspaltung und Ueberlappung auf genau $K$ MMI-Ausgänge. Die Konversionseffizienz des Grundmode A in Moden erster Ordnung auf die $K$ Ausgänge. auf denen eine Ueberlappung möglich ist, beträgt theoretisch fast 50%. Jene des Grundmode B auf die $K$ Ausgänge beträgt theoretisch 100%.

Das MMI besitzt noch eine weitere vorteilhafte Eigenschaft. Ein dritter Mode D, der ebenfalls auf einen Mode erster Ordnung abgebildet wird kann ebenfalls über eine separaten Eingang auf diese Ueberlappenden $K$ Ausgänge abgebildet werden. Dessen Konversionseffizienz auf diese Ueberlappenden $K$ Ausgänge beträgt ebenfalls 50%.

Die Geometrie des MMI ist bestimmt durch die Angabe der Positionen der Wellenleiter-Eingänge am MMI und der MMI-Geometrie selber. Für eine frei wählbar MMI-Breite W, ergibt sich z.B. für ein rechteckiges MMI eine Länge, die demjenigen des (4K)x(4K)-MMI gemäss [M. Bachmann, P.A. Besse, and H. Melchior, "General self-imaging properties in NxN multimode interference couplers including phase relations", Applied Optics vol 33, pp. 3905-3911, July 1994] entspricht:

$$L_{4K} = \frac{1}{4K} \cdot 3L_c \qquad\qquad (Gl.\ 2)$$

Die Notation ist dieselbe wie unter Gl. 1.

Die Wellenleiter-Eingänge der Moden A und D befinden sich in unmittelbarer Nähe der MMI-Längskanten. Die Position des frei wählbaren Parameters a bestimmt einmal mehr die Intensitätsverteilung des Mode erster Ordnung. Die Position des Wellenleiter-Eingangs für den Mode B befindet sind in einem Abstand von W/2 von der MMI-Längskante entfernt.

Im folgenden zeigen wir verschiedene 'Converter-Combiner-MMI's', die einen ersten Grundmode A auf genau $K$ Moden erster Ordnung abbilden und diese exakt mit $K$ Grundmoden, die aus einem zweiten Grundmode B stammen superponiern. Die Eingangsintensität des Mode verteilt sich dabei gleichmässig auf die $K$ Ausgänge des MMI. Der Vorteil dieser 'Converter-Combiner-MMIs' ist die Tatsache, dass dabei sowohl der erste Mode A als auch der zweite Mode B an den $K$ MMI Ausgängen zu fast 100% superponiert werden.

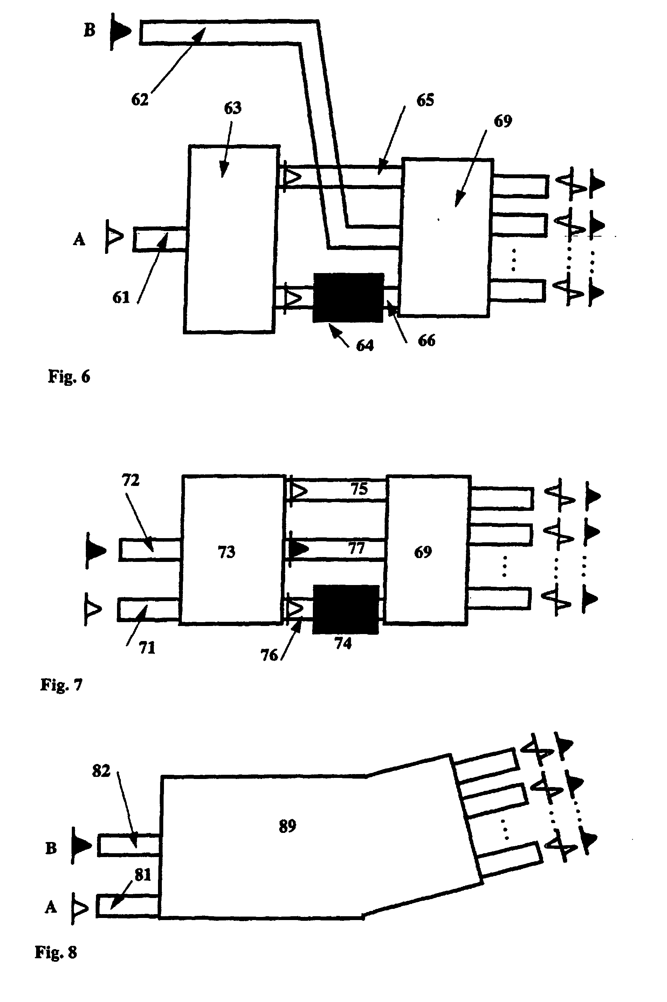

Eine Realisation eines solchen '(l+1)xK MMI-Converter-Combiners' Variante 1 ist in Fig. 6 schematisch dargestellt.

Dieses Bauteil erlaubt es einen optischen Grundmode A als Mode erster Ordnung auf $K$ Wellenleiter Ausgänge abzubilden. Die Konversionseffizienz für die Konvertierung auf Moden erster Ordnung ist dabei fast 100%. Gebraucht man nur diesen einen Eingang, so dient dieses Bauteil als höchst effizienter Modenkonverter und Teiler. Zugleich ermöglicht es dieses Bauteil einen weiteren optischen Grundmode B, auf $K$ Grundmoden in Wellenleiter am MMI-Ausgang aufzuspalten und mit den eben genannten $K$ Moden erster Ordnung zur Ueberlappung zu bringen.

Damit sind mit dieser Struktur einmal mehr 3 Dinge in einem einzigen Bauteil realisiert:

1.) Konversion eines Grundmode A in $K$ Moden erster Ordnung. 2.) Ueberlagerung der Moden erster Ordnung mit den Bildern eines zweiten Grundmode B. 3.) Das MMI dient gleichzeitig als Moden-Teiler, sowohl für den Grundmode A auf die $K$ Moden erster Ordnung als auch für den Grundmode B auf dessen $K$ Grundmoden.

Die Konversionseffizienz beträgt sowohl für den Eingangsmode A auf die konvertierten K Moden erster Ordnung, als auch für den Eingangsmode B auf die $K$ Grundmoden fast 100%.

Das Bauteil besteht am Eingang für den zu konvertierenden Mode A aus folgenden Komponenten: Einem Modenteiler 50:50 mit 2 Wellenleiter-Ausgängen 63. Dies könnte z.B. ein 1x2 MMI, symmetrischer Y-Teiler,... sein. Auf dem einen der beiden befindet sich ein Phasen-Shifter 64. Es ist dabei unwesentlich, wie der Phasen-Shifter realisiert wird. Es könnte sich also um einen aktiven oder passiven Phasen-Shifter handeln. Ein Beispiel fiir einen passiven Phasenshifter wären z.B. zwei konzentrischen Wellenleiterkreise mit unterschiedlichen Radien. Der zu erzeugende Phasenschift des Mode auf dem einen Wellenleiter 66 gegenüber dem Mode auf dem andern Wellenleiter 65 beträgt 180° für ungerade Zahlen K und 0° für gerade Zahlen K. Die beiden Wellenleiter werden danach auf ein 'General (4K)x(4K)-MMI-Converter-Combiner' 69 geführt. Es wird darauf hingewiesen, dass die Wahl einer rechteckigen MMI-Form nicht zwingend ist. Der Eingang 62 des Mode B befindet sich in der Mitte auf der MMI-Eingangsseite des 'General (4K)x(4K)-MMI-Converter-Combiner' 69. Falls man den Eingang 62 über Spiegel auf das MMI 69 führt, kann man den Modenteiler 63 und den 'General (4K)x(4K)-MMI-Converter-Combiner' 69 auch zu einem einzigen Bauteil zusammenfügen.

Das Bauteil besitzt ferner die Eigenschaft, dass es im Fall K=1 in umgekehrter Richtung als Moden-Trenner Grundmoden und Moden erster Ordnung, die sich im gleichen Wellenleiter befinden vollständig trennen kann.

Eine weitere Realisation eines solchen '(1+1)xK MMI-Converter-Combiner' Variante 2 mit K Wellenleiter-Ausgängen ist in Fig. 7 gegeben.

Dieses Bauteil bietet die gleichen Möglichkeiten und Leistungsmerkmale, wie die soeben beschriebene Variante 1. Es unterscheidet sich nur im Aufbau:

Der Grundmode A am Eingang 71 wird dabei in einem 2x2 MMI der Länge [M. Bachmann, P.A. Besse, and H. Melchior, "General self-imaging properties in NxN multimode interference couplers including phase relations", Applied Optics vol 33. pp. 3905-3911, July 1994]:

$$L = \frac{1}{2}3L_c \qquad \text{(Gl. 3)}$$

auf zwei Moden abgebildet. Die beiden Moden werden nach dem 2x2 MMI auf Wellenleiter 75 und 76 geführt. Ein Phasenshifter 74 folgt und sorgt dafür, dass zwischen den beiden Moden in den Wellenleitern für ungerade K ein totaler Phasenunterschied von 180° besteht, respektive für gerade K ein totaler Phasenshift von 0°.

Gemäss Fig. 7 werden die beiden Wellenleiter in den 'General (4K)x(4K)-MMI-Converter-Combiners' 69 geführt und dort auf K Moden erster Ordnung aufgespaltet.

Der Grundmode B wird in der Mitte des 2x2 MMIs 77 eingekoppelt und wird unverändert in der Mitte des 2x2 MMI-Ausgangs wieder ausgekoppelt. Ueber einen Wellenleiter 77 wird der Grundmode B auf die Mitte der Eingangsseite des 'General (4K)x(4K)-MMI-Converter-Combiners' 69 geführt und von dort aus auf K Grundmoden abgebildet. Einmal mehr fallen die K Abbildungen des Grundmode A und des Grundmode B zusammen.

Zum MMI-Converter-Combiner aus Fig. 7 existiert eine interessante 3.

Variante. Diese ist in Fig. 8 gegeben.

Auch dieses Bauteil bietet die gleichen Möglichkeiten und Leistungsmerkmale, wie die soeben beschriebene Variante 1. Es unterscheidet sich nur im Aufbau:

Der Phasen-Shift aus dem mittleren Teil der Fig. 7 wurde dabei durch eine Verdrehung des 'General (4K)x(4K)-MMI-Converter-Combiners' 69 gegenüber dem vorangehenden 2x2 MMI 73 aus Fig. 7 erreicht. Die beiden MMIs: das 2x2 MMI 73 und der 'General (4K)x(4K)-MMI-Converter-Combiners' 69 sind dabei zu einem einzigen MMI 89 zusammengefügt worden.

Die obigen MMI-Strukturen lassen sich als Moden-Filter verwenden. Benutzt man beim 'General (4K)x(4K)-MMI-Converter-Combiners' aus Fig. 5 lediglich den mittlern Wellenleitereingang 52 so werden symmetrische Moden (z.B. der Grundmode), die in diesem Wellenleiter geführt wurden am MMI-Ausgang auf K entsprechende symmetrische Moden aufgespaltet. Die antisymmetrischen Moden (z.B. die Moden erster Ordnung) werden auch aufgespaltet, aber auf andere MMI-Ausgänge. Damit ist eine Zerlegung in symmetrische und antisymmetrische Moden möglich.

Die MMI-Strukturen aus den Figuren 6, 7 und 8 lassen sich im Fall K=1 als Moden-Trenner verwenden. Benutzt man die Strukturen in umgekehrter Richtung.

also den Ausgang dieser Strukturen als Eingang des MMIs, so werden symmetrische Moden und antisymmetrische Moden in diesem Wellenleiter auf verschiedene Wellenleiter-Ausgänge aufgeteilt. Z.B. wird der symmetrische Grundmode vom antisymmetrischen Mode erster Ordnung getrennt und der Mode erster Ordnung wird in einen Grundmode transformiert.

Des weiteren werden MMI-Strukturen gegeben, die es ermöglichen einen symmetrischen (z.B. Grundmode) und einen antisymmetrischen Mode (z.B.einen Mode erster Ordnung) mit verschiedenen Intensitäten auf K Ausgangswellenleiter abzubilden. Die Längen dieser MMIs können für den Fall rechteckiger MMIs aus den aus der Literatur bekannten (2K)x(2K)-MMI abgeleitet werden:

$$L_{2K} = \frac{1}{2K} \cdot 3L_c \qquad\qquad \text{(Gl. 4)}$$

K ist eine natürliche Zahl grösser oder gleich 2. $L_c$ wurde bereits oben definiert. Für Wellenleiter-Eingangspositionen $x^{in}_i = i\frac{W}{2K}$ mit i=1, 2, ..., 2K-1 und Ausgangspositionen $x^{out}_j = W - j\frac{W}{2K}$ mit j=1, 2, ..., 2K-1 und $i + j$ gerade Zahlen, wobei x von einer Längskante entlang des MMI-Eingangs gemessen wird, erhält man folgende Intensitätsverteilungen am Ausgang j:

$$r^2_{ij} = \frac{2}{K} \sin^2\left(\frac{\pi}{2}i - ji\frac{\pi}{4K}\right) \quad \text{für symmetrische Moden} \qquad \text{(Gl. 5)}$$

$$r^2_{ij} = \frac{2}{K} \cos^2\left(\frac{\pi}{2}i - ji\frac{\pi}{4K}\right) \text{ für antisymmetrische Moden} \qquad \text{(Gl. 6)}$$

Wählt man die Position i des Eingangs sowohl für den normierten symmetrischen als auch für den normierten antisymmetrischen Mode am gleichen Ort, so erhält man an allen Ausgängen j, für die Summe der Intensitäten der beiden Moden, die gleiche konstante Intensitätsverteilung.

Desgleichen erhält man an allen Ausgängen j die gleiche konstante Intensitätsverteilung, falls man für den normierten symmetrischen Mode die Eingangsposition $i = 2p$ und für den normierten antisymmetrischen Mode die Eingangsposition $i' = 2K-2p$ wählt.

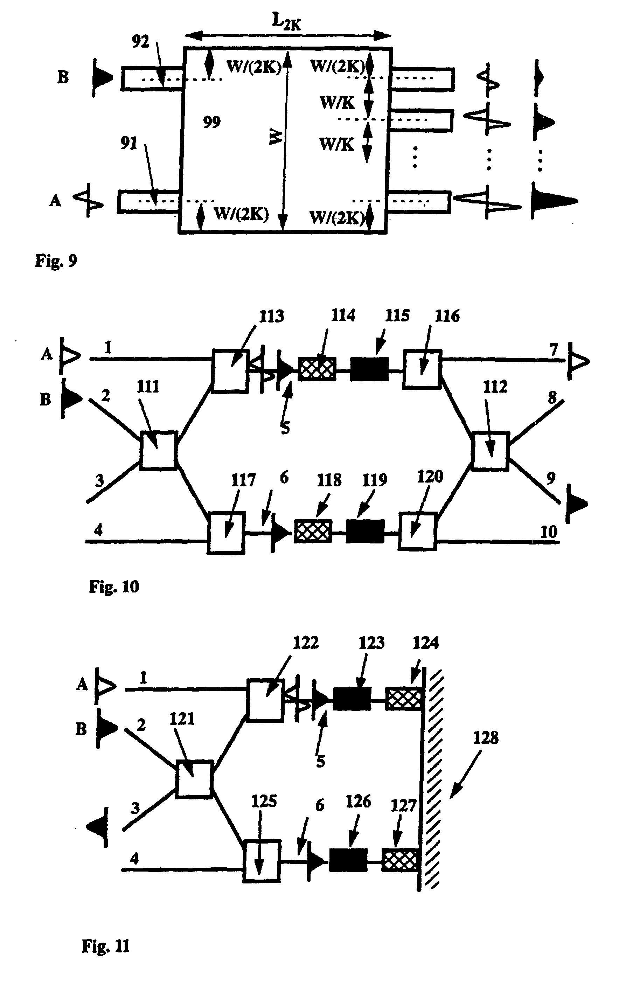

Hingegen wählt man für den symmetrischen Mode die Eingangsposition $i = 2p + 1$ und für den antisymmetrischen Mode die Eingangsposition $i' = 2K - 2p - 1$, so erhält man am Ausgang j fiir beide Moden dieselben Intensitätsverhältnisse. Ein- und Ausgänge sind für diesen Fall in der Fig. 9 beispielhaft gegeben.

Wählt man für die Eingänge des symmetrischen und des antisymmetrischen Mode beliebige Positionen i und i', so erhält man für die beiden Moden ganz unterschiedliche Teilverhältnisse an den Ausgängen.

Variationen in der Geometrie des MMIs können zu anderen Teilverhältnissen führen.

Die Converter-Combiner MMIs haben auf verschiedensten Gebieten der integrierten Optik Anwendungen. Die im folgenden Besprochene Anwendung in Optisch-Optischen Schaltern stellt nur eine Anwendung unter vielen dar.

Im weiteren werden die Optisch-Optischen Schalter und Wellenlängen-Konverter beschrieben und Wege zu Ihrer Ausführung aufgezeigt. Die Schalter werden so weiterentwickelt, dass sie 1 Eingang auf 2 Ausgänge mit guten On/Off-Schaltverhältnissen abbilden.

In Fig. 10 ist ein Beispiel eines Optisch-Optischen Schalters mit 2 möglichen Ausgängen, der nach dem Prinzip der Kreuz-Phasen-Modulation (XPM) arbeitet und die Einkopplung und Konvertierung des Kontroll-Signals via MMI erlaubt skizziert. Ein solcher Schalter besteht mindestens aus:

- einem Modenteiler 111, falls man das Bauteil vorwärts betreibt, respektive 112, falls man das Bauteil in umgekehrter Richtung betreibt, der ein optisches Eingangssignal B auf die 2 verschiedenen Arme der MZI-Konfiguration aufteilt. Die Anzahl Eingänge in den Modenteiler kann beliebig sein, wesentlich ist nur. dass das Eingangssignal in einem bestimmten Verhältnis auf die Wellenleiterarme abgebildet wird.
- einem Modenvereiniger 112 respektive 111, der das Eingangssignal vereinigt und je nach Phasenverhältnis und Anteilen auf den beiden MZI-Armen auf einen Ausgang führt. Für einen Schalter mit zwei möglichen Ausgängen werden mindestens 2 Ausgänge am Modenvereiniger 112 benötigt. Für einen Schalter mit einem Ausgang oder einen Wellenlängenkonverter genügt 1 Wellenleiterausgang.
- einem Bauteil 113 und/oder 117, das es erlaubt, ein oder mehrere optisches Kontroll-Signale einzukoppeln
- mindestens einem oder zwei Bereichen mit nichtlinearem Material 114 und/oder 118. Je nachdem ob das optische Kontroll-Signal anwesend ist oder nicht wird in diesem Bereich im Eingangssignal ein Phasenshift erzeugt. Die Intensität und die Phase sind in einem optisch-nichtlinearen Material nicht unabhängig, sondem hängen via die Kramers-Kronig-Transformation zusammen. Der in diesem Material erzeugte Phasen-Shift und die Intensitätsänderung im optischen Eingangssignal bestimmen die Schalteigenschaften des Schalters am Ausgang.
- Ein aktiver oder passiver Phasenshifter 115 und/oder 119 kann irgendwo auf den MZI-Armen angebracht sein. Ein Beispiel eines passiven Phasenshifters wären z.B. 2 unterschiedlich lange MZI-Arme. Als Phasenshifter können auch Halbleiter-Verstärker gebraucht werden. Diese müssen dann aber geeignet plaziert werden. Z.B. müsste der Halbleiter-Verstärker 115 zwischen den Bauteilen 116 und 112 oder zwischen 111 und 113 angeordnet sein.

Im eben skizzierten Schalter erfolgt die Einkopplung des Kontroll-Signals direkt auf einen der MZI-Arme 5 oder 6. Das optischen Kontroll-Signal wird über ein "MMI-Converter-Combiner" 113 und/oder 117 eingekoppelt. Dabei wird der Grundmode des optischen Kontroll-Signals A in einen Mode erster Ordnung konvertiert und gleichzeitig mit dem optischen Eingangssignal B vereinigt. Es handelt sich dabei um ein "MMI-Converter-Combiner" gemäss dem Text zu Fig. 2, Fig. 4, Fig. 5, Fig. 6, Fig. 7, Fig. 8 oder Fig. 9. Es könnte sich also beispielsweise um ein "3x3-MMI-Converter-Combiner", um ein "1+1x1-MMI-Converter-Combiner", usw. ... handeln. Je nach Anwendung wird das optische Kontroll-Signal in Bauteilen 116 und/oder 120 wieder ausgekoppelt. Das Kontroll-Signal könnte z.B. in einem umgekehrt betriebenen "1+1x1-MMI-Converter-Combiner" wider ausgekoppelt und vom Eingangssignal getrennt werden oder in einem MMI-Filter ausgekoppelt werden. Es besteht aber auch die Möglichkeit auf die Bauteile 116 und/oder 120 zu verzichten und das Kontroll-Signal auf den Modenkombinerer 112 zu führen. Eine ander Möglichkeit wäre die Bauteile 116 und/oder 120 dazu zu benutzen ein anders optisches Signal (z.B. ein weiteres Kontroll-Signal, Pump-Signal,...) einzukoppeln.

Das in Fig. 10 skizzierte Bauteil lässt sich als Schalter mit 2 Ausgängen betreiben. Als mögliche Eingänge für das optische Kontroll-Signal kommen die Eingänge 1 und 4 oder umgekehrt betrieben die Eingänge 8 und 9 in Frage. Das optische Eingangssignal kann je nach Wahl der Modenteiler 111 und Vereiniger 112 über die Eingänge auf der linken oder der rechten Seite betrieben werden.

Das Bauteil kann in dem Sinn als Wellenlägenkonverter benutzt werden, als dem optischen Kontroll-Signal A der Wellenlänge $\lambda_1$ ein optisches Signal B der Wellenlänge $\lambda_2$ auf einem der Ausgänge entspricht. Die Möglichkeit das Kontroll-Signal an einem separaten Ausgang wieder auszukoppeln oder am Ausgang des Signals B stark zu unterdrücken erlaubt es das Bauteil zu kaskadieren oder/und bidirektional zu betreiben.

In Fig. 11 ist ein Beispiel eines Optisch-Optischen Schalters respektive Wellenlängenkonverters mit 1 möglichen Ausgang, der nach dem Prinzip der Kreuz-Phasen-Modulation (XPM) arbeitet und die Einkopplung und Konvertierung des Kontroll-Signals via MMI erlaubt, skizziert. Dieser besteht aus:

- einem Moden-Koppler 121, der ein optisches Eingangssignal B auf die 2 verschiedenen Arme der MZI-Konfiguration aufteilt. Die Anzahl Eingänge in den Koppler kann beliebig sein, wesentlich ist nur, dass das Eingangssignal in einem bestimmten Verhältnis auf die beiden Wellenleiterarme abgebildet wird.
- einer reflektierenden Schicht 128
- mindestens einer Komponente 122 und/oder 125, die es erlaubt, ein optisches Kontroll-Signal einzukoppeln
- mindestens einem oder zwei Bereichen mit nichtlinearem Material 124 oder/und 127. Je nachdem ob das optische Kontroll-Signal A anwesend ist oder nicht wird in diesem Bereich am Signal B ein Phasenshift erzeugt. Das nichtlineare Material kann irgendwo auf dem Interferometer-Arm angebracht sein.
- Ein aktiver oder passiver Phasenshifter 123 und/oder 126 kann irgendwo auf den MZI-Armen angebracht sein.

Die Einkopplung des Kontroll-Signals erfolgt direkt auf einen der MZI-Arme 5 oder 6. Das optischen Kontroll-Signal wird über ein "MMI-Converter-Combiner" 122 und/oder 126 eingekoppelt. Dabei wird der Grundmode des optischen Kontroll-Signals A in einen Mode erster Ordnung konvertiert und gleichzeitig mit dem optischen Eingangssignal vereinigt. Es handelt sich dabei um ein "MMI-Converter-Combiner" gemäss Fig. 2, Fig. 4, Fig. 5, Fig. 6, Fig. 7, Fig. 8 oder Fig. 9. Sowohl das Eingangssignal als auch das Kontroll-Signal werden an der reflektierenden Schicht zurückgespiegelt. Das Kontroll-Signal wird je nach Wahl des MMI 122 und/oder 125 ganz oder teilweise wieder ausgekoppelt. Das reflektierte Eingangssignal aus dem Wellenleiterarm 5 und 6 wird auf den Modenteiler-Vereiniger geführt und vereinigt Je nach der Phasenbeziehung im Wellenleiterarm 5 und 6 wird das Eingangssignal auf einen vom Wellenleitereingang verschiedenen Ausgang gerührt.

Diese reflektierende MZI-Struktur wird auch als MI-Konfiguration bezeichnet.

Das in Fig. 11 skizzierte Bauteil lässt sich als Schalter mit 1 Ausgang betreiben. Als mögliche Eingänge für das optische Kontroll-Signal kommen die Eingänge 1 und 4 in Frage. Das optische Eingangssignal kann über den Eingang 2 oder 3 eingeführt werden.

Das Bauteil kann in dem Sinn als Wellenlägenkonverter benutzt werden, als dem optischen Kontroll-Signal A der Wellenlänge $\lambda_1$ ein optisches Signal B der Wellenlänge $\lambda_2$ auf einem der Ausgänge entspricht.

Die Aufgabe einen Optisch-Optischen Schalter mit 2 guten Ausgängen, d.h. guten On/Off-Schaltverhältnissen zu erhalten kann mit dem im Text zu Fig. 10 gegebenen Schalter respektive Wellenlängenkonverter und der Wahl von Moden-Kopplern 111 und 112, die es erlauben das Eingangssignal mit verschiedenen Teilungsverhältnissen auf die beiden MZI-Arme aufzuteilen resp. zu vereinigen, gelöst werden. Dabei gehört zu einem Phasenshift $\Delta\phi_1$ und einem Intensitätsverhältnis p1 zwischen den Eingangssignalen auf den beiden MZI-Armen ein bestimmter Schaltzustand auf einen Ausgang. Verändert man den Phasenshift auf $\Delta\phi_2$ und das Intensitätsverhältnis auf p2, so wird das Eingangssignal auf den zweiten Ausgang geführt.

In einem XPM-Schalter wird durch das Kontroll-Signal, z.B. auf dem MZI-Arm 5, die Phase des Eingangssignals im Bereich des nichtlinearen Mediums verändert. In einem nichtlinearen Medium führt eine Phasenänderung meistens auch zu einer Intensitätsänderung desselben Signals. Die Kramers-Kronig-Relation (KK) beschreibt diesen Zusammenhang. Mit andern Worten, das Kontroll-Signal verändert 2 charakteristische Grössen des Eingangssignals auf dem MZI-Arm 5: die Phase und die Intensität. Damit man einen Schalter mit 2 guten Ausgängen erhält muss man dementsprechend diese 2 charakteristischen Grössen des Eingangssignals kontrollieren können. Der Schalter mit Modenteilern und Kombinieren, die vom 50:50 Teilungsverhältnis abweichen, erlaubt es diese 2 Grössen zu kontrollieren:

1.) durch die Wahl der Intensität des Kontroll-Signals wird auf einem Wellenleiterarm im Eingangssignal ein Phasenshift von $\Delta\phi_1$ auf $\Delta\phi_2$ als Funktion der Intensität des Kontroll-Signals induziert.

2.) Der im Eingangssignal auf MZI-Arm 5 induzierte Phasenshift $\Delta\phi_1$ ist begleitet von einer Intensitätsänderung $\Delta I$ im Eingangssignal auf demselben Wellenleiterarm des MZI nach Kramers-Kronig (KK). Nun kann man aber durch die Wahl des Teilungsverhälnisses im Moden-Teiler und Vereiniger dafür sorgen dass diese Intensitätsänderung gerade derjenigen entspricht, die benötigt wird um von einem Intenstitäsverhältnis p1 der beiden Signale auf den MZI-Armen auf das für den 2. Schaltzustand benötigte Verhältnis von p2 zu gelangen.

Die Aufgabe einen Optisch-Optischen Schalter mit 1 möglichen guten Ausgang zu erhalten kann mit dem in Fig. 11 gegebenen Schalter respektive Wellenlängenkonverter und der Wahl eines Moden-Kopplers 121, der vom 50:50 Teilungsverhältnis abweicht, gelöst werden. Wie beim Schalter mit 2 möglichen Ausgängen erlaubt es dieser Moden-Koppler 121, die in einem XPM-Schalter auftretenden 2 Grössen zu kontrollieren.

Im folgenden bezeichnen wir mit 'asymmetrischen Moden-Teilern' Bauteile, die das Eingangssingal mit verschiedenen Teilungsverhältnissen auf die beiden MZI-Arme abbilden können, und mit 'asymmetrischen Moden-Vereinigern' Bauteile, die 2 Signale mit verschieden Intensitäten zu einem einzigen Ausgangssignal vereinigen können. Die Geometrie dieser Bauteile kann aber sehr wohl symmetrisch sein. Asymmetrische Moden-Koppler können sowohl asymmetrische Moden-Teiler als auch asymmetrische Moden-Vereiniger sein.

Die Aufgabe einen Optisch-Optischen Schalter mit 2 Ausgängen mit guten On/Off-Schaltverhältnissen zu erhalten kann mit dem im Text zu Fig. 10 gegebenen Schalter respektive Wellenlängenkonverter und der Wahl von asymmetrischen Moden-Kopplern 111 und 112 gelöst werden. Dank der Wahlfreiheit von Teilern und Vereinigern mit verschiedenen Teilungsverhältnissen, kann man die Schalter so konstruieren, dass der Phasenshifter zur Erreichung des Schaltzustandes überflüssig wird. da man den zweiten asymmetrischen Vereiniger 112 an die Phasenverhältnisse anpassen kann.

Als Moden-Koppler 111 und 112 eignen sich "Butterfly"-MMI's [P.A. Besse, et al., ECOC 1994, Sept 25-29 1994, p. 669-67,Firenze]. Sie bieten als Teiler und Vereiniger verschiedene Teilungsverhältnisse. Es ist möglich als Teiler/Vereiniger 111 und Vereiniger/Teiler 112 zwei verschiedene "Butterfly"-MMI's zu wählen, so dass man den Schalter derart konstruieren kann, dass der Phasenshifter zur Erreichung des Schaltzustandes überflüssig wird, da man den zweiten asymmetrischen Vereiniger/Teiler 112 an die Phasenverhältnisse anpassen kann.

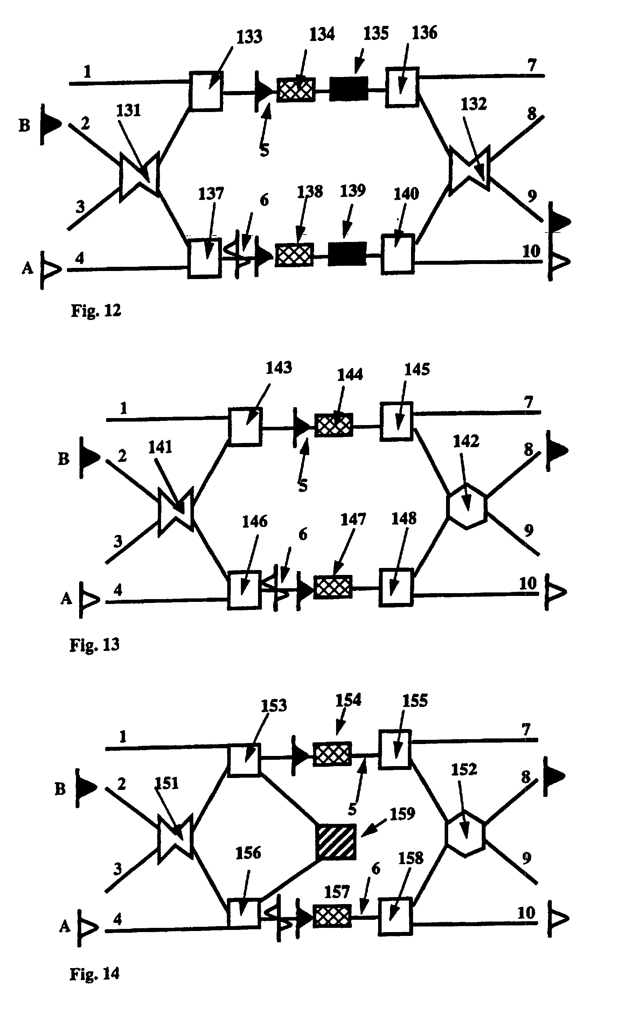

In Fig. 12 ist ein Beispiel eines XPM-Optisch-Optischen Schalters mit 2 möglichen Ausgängen gegeben, der zur Ein- und Auskopplung des Eingangssignals B identische "Butterfly"-MMI, als asymmetrische Moden-Koppler und zur Einkopplung des Kontroll-Signals "MMI-Converter-Combiner" verwendet.

"Butterfly"-MMIs die beispielsweise 2 Ein- und Ausgänge haben, können als Moden-Koppler gebraucht werden.

Die Wahl der Intensität des Kontroll-Signals und der Asymmetrie in den Moden-Kopplern erlaubt es, die beiden Schaltzustände zu optimieren.

Exemplarisch sei hier der Schaltvorgang von einem Eingangssignal B am Eingang 2 auf die Ausgänge 8 respektive 9 der Fig. 12 erklärt. Dabei werden wir folgende Notation gebrauchen: Der Phasenshift auf MZI-Arm 6 gegenüber jenem auf Arm 5 sei $\Delta\Phi_1'$ unmittelbar hinter dem MMI 131 und $\Delta\Phi_1''$ unmittelbar vor dem MM1 132 falls das Eingangssingal am Eingang 2 eingeführt wurde. Für ein Eingangssignal am Eingang 3 gebrauchen wir entsprechend die Phasenshifts $\Delta\Phi_2'$ und $\Delta\Phi_2''$, wobei wir uns wiederum auf den Shift von MZI-Arm 6 gegenüber jenem auf MZI-Arm 5 beziehen.

Prinzipiell werden die Phasenunterschiede immer von Arm 6 relativ zu Arm 5 gerechnet. $\Delta\Phi_1$ ist der nötige Offset Phasenshift. $\Delta\Phi_2$ ist der vom Kontroll-Signal erzeugte Phasenshift.

- Eingangssignal am Eingang 2 auf Ausgang 8:

Das "Butterfly"-MMI 131 teilt das Einganssignal B der Intensität $I_0$ im Verhältnis $p1 = I_1/I_2$ auf die beiden MZI-Arme 5 und 6 auf. Dabei sei $I_1$ die Intensität des Eingangssignals auf MZI-Arm 5 und $I_2$ jene auf dem Arm 6. Es gilt $I_0 = I_1 + I_2$. Unmittelbar hinter dem MMI 131 haben die beiden Signale auf den beiden MZI-Armen relativ zueineander einen Phasenshift von $\Delta\Phi_1'$.

Damit diese beiden Signale auf den MZI-Armen 5 und 6 am "Butterfly"-MMI-Vereiniger 132, der mit dem "Butterfly"-MMI 131 baugleich ist, wieder zu einem einzigen Signal am Ausgang 8 vereinigt werden, müssen die Signale nach wie vor das Intensitätsverhältnis p1, sowie die Phasenbeziehung $\Delta\Phi_1'' = -\Delta\Phi_1'$ aufweisen. Für diesen Schaltvorgang muss also lediglich die Phasenbeziehung zwischen den beiden MZI-Armen angepasst werden. Z.B. könnte man mittels eines passiven Phasenshifter auf dem entsprechenden MZI-Arm einen Phasenshift von $\Delta\Phi_1 = -2\Delta\Phi_1'$ induzieren. Dieser Phasenshift muss lediglich einmal an die Struktur angepasst werden und kann dann für alle Schaltzustände fix belassen werden.

- Eingangssignal am Eingang 2 auf Ausgang 9:

Unmittelbar nach dem "Butterfly"-MMI 131 besitzen die Signale auf den beiden MZI-Armen wiederum das Intensitätsverbältnis p1 und den relativen Phasenshift $\Delta\Phi_1$' zueinander. Damit das Eingangssignal auf den beiden MZI-Armen am "Butterfly"-MMI 132 zu einem einzigen Signal am Ausgang 9 vereinigt wird, muss das Intensitätstverhältnis $p2 = 1/p1$ und die Phasenbeziehung $\Delta\Phi''_2 = -\Delta\Phi_2$' erfüllt sein.

Mittels des Kontroll-Signals, das wir beispielsweise im MZI-Arm 6 einkoppeln, wird der dazu zusätzlich erforderliche Phasenshift $\Delta\Phi_2$ auf dem MZI-Arm 6 erzeugt. Unter der Voraussetzung, dass der oben angelegte Phasenshift $\Delta\Phi_1$ immer noch am gleichen MZI-Arm angelegt ist, wird ein Phasenshift von $\Delta\Phi_2 = \Delta\Phi_1$' - $\Delta\Phi_2$' benötigt. Das Kontroll-Signal erzeugt aber im MZI-Arm 6 auch eine Intensitätsänderung $\Delta I$ im Eingangssignal. Falls die Wahl der Asymmetrie im "Butterfly"-MMI gerade so gewählt wurde, dass gilt: $p2 = 1/p1 = \dfrac{1}{I_2 - \Delta I}$ wird das Signal auf den Ausgang 9 geschaltet.

In Fig. 13 ist das Beispiel eines XPM-Optisch-Optischen Schalters mit 2 möglichen Ausgängen gegeben, der zur Ein- und Auskopplung des Eingangssignals B je verschiedene "Butterfly"-MMIs, als asymmetrische Modenteiler/ Vereiniger 141 und Vereiniger/Teiler 142 verwendet und zur Einkopplung des Kontroll-Signals "MMI-Converter-Combiner" 143 und 146 verwendet. Dank der Wahlfreiheit von Teilern und Vereinigern mit verschiedenen Teilungsverhältnissen, kann man die Schalter so konstruieren, dass der Phasenshifter 135 und 139, wie er noch in Fig. 12 benötigt wurde, zur Erreichung der Schaltzustände überflüssig wird, da man den zweiten asymmetrischen Vereiniger/Teiler 142 an die Phasenverhältnisse anpassen kann. Zur Eliminierung eines allfälligen technologiebedingten Offsets in der Phase, kann es aber trotzdem von Vorteil sein, wenn man einen Phasenshifter vorsieht. Je nach Anwendung kann das Kontroll-Signal in einem zusätzlichen Bauteil 145 und/oder 148 wieder ausgekoppelt, rausgefiltert oder im MZI-Arm 5 und/oder 6 belassen werden. Die Auskopplung erfolgt vorteilhafterweise mit den in Fig. 2, Fig. 4, Fig. 5, Fig. 6, Fig. 7, Fig. 8 oder Fig. 9 gegebenen "MMI-Converter-Combinern".

Exemplarisch sei hier der Schaltvorgang von einem Eingangssignal B am Eingang 2 auf die Ausgänge 9 respektive 8 der Fig. 13 erklärt:

- Eingangssignal am Eingang 2 auf Ausgang 9:

Das "Butterfly"-MMI 141 teilt das Einganssignal B der Intensität $I_0$ im Verhältnis $p1 = I_1/I_2$ auf die beiden MZI-Arme 5 und 6 auf. Wir verwenden dieselbe Notation wie bei der Beschreibung der Fig. 12. Unmittelbar hinter dem MMI haben die beiden Signale auf den beiden MZI-Armen relativ zueineander einen Phasenshift von $\Delta\Phi_1$'.

Das "Butterfly"-MMI 132, das nun folgt um die beiden Signale auf den MZI-Armen 5 und 6 wieder zu einem Ausgangssignal zu vereinigen, wird nun so gewählt, dass bei einem Intensitätsverhältnis $p1$ der Intensitäten auf den MZI-Armen und einem relativen Phasenshift $\Delta\Phi_1'' = \Delta\Phi'_1$ der Phasen der beiden Signale, das Signal gerade auf den Ausgang 9 abgebildet wird. Im Gegensatz zum Schalter in Fig. 12 erzeugt nun das "Butterfly"-MMI 141 am MZI-Eingang gerade das richtige Intensitätsverhältnis und die korrekte Phasenbeziehung, wie sie im "Butterfly"-MMI 142 am Ausgang des MZI benötigt werden. Es wird kein zusätzlicher Phasenshifter benötigt $\Delta\Phi_1 = 0$.

Mögliche "Butterfly"-MMIs die sich wie oben ergänzen existieren. MMIs bestehen im wesentlichen aus einem verbreiterten Wellenleiter in dem Interferenzeffekte möglich sind. Z.B. könnte für das "Butterfly"-MMI 141 ein "Butterfly"-MMI mit einer Verengung in der Mitte verwendet werden. Das entsprechende "Butterfly"-MMI 142 wäre dann ein "Butterfly"-MMI mit reziprokem Teilungsverhältnis 1/p1. Dieses müsste dann in der Mitte breiter werden.

- Eingangssignal am Eingang 2 auf Ausgang 8:

Der Schältvorgang erfolgt analog zu jenem, der in Fig. 12 beschrieben wurde.

Mit einem Kontroll-Signal auf beispielsweise MZI-Arme 6 wird ein Phasenshift $\Delta\Phi_2 = \Delta\Phi_2' - \Delta\Phi_1'$ erzeugt. Das Kontroll-Signal erzeugt auch eine Intensitätsänderung $\Delta I$ im Eingangssignal des Arms 6. Falls die Wahl der Asymmetrie im "Butterfly"-MMI gerade so gewählt wurde, dass gilt: $p2 = 1/p1 = \dfrac{1}{I_2 - \Delta I}$ wird das Signal auf den Ausgang 8 geschaltet.

Zur Einkopplung des Kontroll-Signals in einen XPM-Optisch-Optischen Schalter mit 2 guten Ausgängen ist der "3x3-MMI-Converter-Conbiner" Fig. 4a), besonders geeignet. Dieses Bauteil ist extrem kurz und besitzt eine grosse Wellenlängen-Bandbreite. Für das Eingangssignal B ist das MMI unsichtbar, da es zu fast 100% auf den Ausgang abgebildet wird. Das Kontroll-Signal wird als Mode erster Ordnung mit einer Konversionseffizienz von fast 66% in den MZI-Arm abgebildet.

In Fig. 14 ist als Beispiel ein XPM-Optisch-Optischer Schalter mit 2 möglichen Ausgängen gegeben, der zur Ein- und Auskopplung des Eingangssignals B je verschiedene "Butterfly"-MMIs, als asymmetrische Modenteiler 151 und Vereiniger 152, wie im Text zur Fig. 13 beschrieben, verwendet. Zur Einkopplung des Kontroll-Signals werden "3x3-MMI-Converter-Combiner" 153 und 156 verwendet. Anstatt der Wahl von verschiedenen "Butterfly"-MMIs auf den beiden Seiten des MZI, wäre auch ein Schalter mit identischen "Butterfly"-MMI's auf beiden Seiten des MZI denkbar, wie es unter Fig. 12 beschrieben wurde.

Im Bauteil 159 werden die restlichen 33% des Kontroll-Signals in eine absorbierende Schicht geführt. Es gibt beliebig viele andere Möglichkeiten diese 33% des Kontroll-Signals aus der Struktur zu leiten.

Je nach Anwendung kann das Kontroll-Signal in einem zusätzlichen Bauteil 155 und/oder 158 ausgekoppelt, rausgefiltert oder im MZI-Arm 5 und/oder 6 belassen werden.

Andere Möglichkeiten zur Einkopplung des Kontroll-Signals in einen XPM-Optisch-Optischen Schalter mit 2 möglichen Ausgängen bieten der "(1+1)x1-MMI-Converter-Conbiner" Variante 1, 2 oder 3 .

Optisch-Optische Schalter mit 2 Ausgängen mit guten On/Off-Schaltverhältnissen können mit dem im Text zu den Fig. 12 oder Fig. 13 gegebenen Verfahren erzielt werden. Zur Erziehung der guten On/Off-Schaltverhältnisse ist die Art und Weise wie man das Signal B in die MZI-Konfiguration ein- und auskoppelt wichtig. Der Aufbau der MZI-Arme selber, der mittlere Teil, kann von der im Text zu Fig. 12 oder Fig. 13 beschriebenen Variante abweichen.

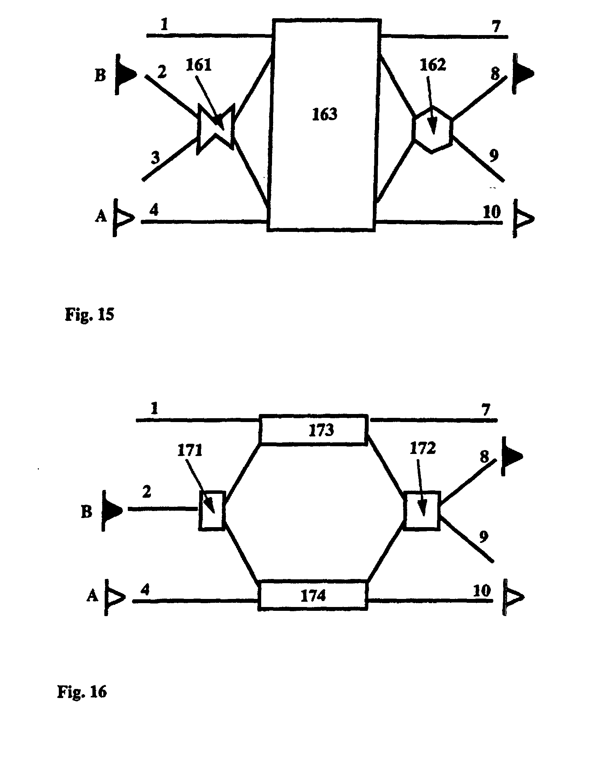

In Fig. 15 ist ein Optisch-Optischer Schalter mit 2 Ausgängen mit guten On/Off-Schaltverhältnissen gegeben. Der Bereich mit den Kopplern 161 und 162 folgt dem Aufbau gemäss dem Text zu Fig. 12 oder Fig. 13. Der mittlere Teil 163, der mehrere verschiedene Bauteile darstellt, dient zur Ein- evtl. auch Auskopplung eines Kontroll-Signals und zur Erzeugung des nichtlinearen Effekts - evtl. auch weiterer Funktionen. Zur Einkopplung des Kontroll-Signals können. MMI-Convener-Combiner aber auch beliebig andere Koppler verwendet werden. Es könnten dies z.B. 2x2-MMI, "3dB-Directional-Coupler", asymmetrische Y-Vereiniger,... sein. Das Kontroll-Signal könnte auch als Grundmode eingekoppelt werden. Es ist jedoch notwendig. dass es in 163 mindestens einen Bereich mit einem nichtlinearen Material gibt.

Die On/Off-Schaltverhältnisse in einem XPM-Schalter, Fig. 16, können auch durch das Anbringen von 2 verschieden starken bzw. grossen nichtlinearen Bereichen (z.B. verschiedene Ströme anlegen, falls das nichtlineare Medium aus Halbleiter-Verstärkern besteht,...), die sich innerhalb des Bereichs 173 und 174 befinden, verbessert werden. 173 und 174 stellen die MZI-Arme dar, die sowohl Elemente für das Ein- und evlt. Auskoppeln des/der Kontroll-Signale A, als auch das nichtlineare Medium und evtl. Phasenshifter enthalten. Angenommen das Kontroll-Signal erzeugt eine Intensitätsänderung von $\Delta I$ am Eingangssignal auf einem MZI-Arm, z.B. Arm 5, so kann man die Stärke der beiden nichtlinearen Medien so wählen, dass wenn kein Kontroll-Signal vorhanden ist, das Eingangssignal auf dem Arm 5 um ca. $\Delta I/2$ grösser ist als auf Arm 6. Nach Anlegen des Kontroll-Signals auf Arm 5 ist das Eingangssignal auf diesem Arm dann um ca. $\Delta I/2$ kleiner als auf Arm 6. Diese Symmetrisierung nicht-idealer Schaltzustände an den beiden Ausgangswellenleitern bewirkt, dass man 2 fast identische, relativ gute On/Off-Schaltverhältnisse an den 2 Ausgängen erhält. Im Fall wo man mit identischen nichtlinearen Medien starten würde, erhielte man ohne Kontroll-Signal ein gutes Schaltverhältnis und nach Anlegen des Kontroll-Signals ein schlechtes Schaltverhältnis. Das Verwenden von verschieden starken, bzw. verschieden grossen nichtlinearen Medien erzeugt einen zusätzlichen Phasen-Shift, den man mittels der Wahl von geeigneten 50:50 Moden-Kopplern 171 und 172 kompensieren kann. Für den Moden-Koppler 171 wird ein 1x2-MMI der Länge $L$:

$$L = \frac{1}{8}3L_c \qquad \text{(Gl. 7)}$$

verwendet. Für den Moden-Koppler 172 wird ein 2x2-MMI der Länge:

$$L = \frac{1}{2}3L_c \text{ oder } L = \frac{1}{6}3L_c, \qquad \text{(Gl. 8)}$$

wobei die genauen Angaben zur Geometrie der MMIs der Referenz [M. Bachmann, P.A. Besse, and H. Melchior, "General self-imaging properties in NxN multimode interference couplers including phase relations", Applied Optics vol 33, pp. 3905-3911, July 1994] entnommen werden können. Mit der Wahl dieser Koppler, können die MZI-Arme symmetrisch gebaut werden, ohne dass ein zusätzlicher Phasenshifter notwendig ist. Anstelle des 2x2-MMI kann man auch andere 50:50-Koppler verwenden, die analoge Phasenverhältnisse für die Eingangssingale haben.

XPM-Schalter mit guten On/Off-Schaltverhältnissen können auch durch eine Kombination der Verfahren wie sie im Text zu Fig. 15 und Fig. 16 beschrieben wurden erstellt werden. Solch ein Schalter könnte z.B. aus einem "Butterfly"-MMI 161 und einem 50:50 Koppler 172 mit 2 verschieden starken nichtlinearen Medien auf den MZI-Armen gebildet werden.

Im Folgenden wird ein weiteres Verfahren für die Konstruktion eines kaskadierbaren, bidirektional betreibaren Optisch-Optischen Schalters angegeben. Bei diesem Verfahren bilden 2 Grundmoden auf den 2 Armen eines sogenannten "innern" MZI's zusammen einen höheren Ordungsmode. Man sieht sofort, dass man diese Grundmoden als höhere Ordnungsmoden auffassen kann, wenn man die Abstände der beiden Wellenleiter des "innern" MZI's verkleinert bis sich die Wellenleiter berühren. Das "innere" MZI kann mit MMI's gebildet werden. Damit wird auf eine andere Art ein MMI zur Modenkonversion gemäss Anspruch 1 verwendet.

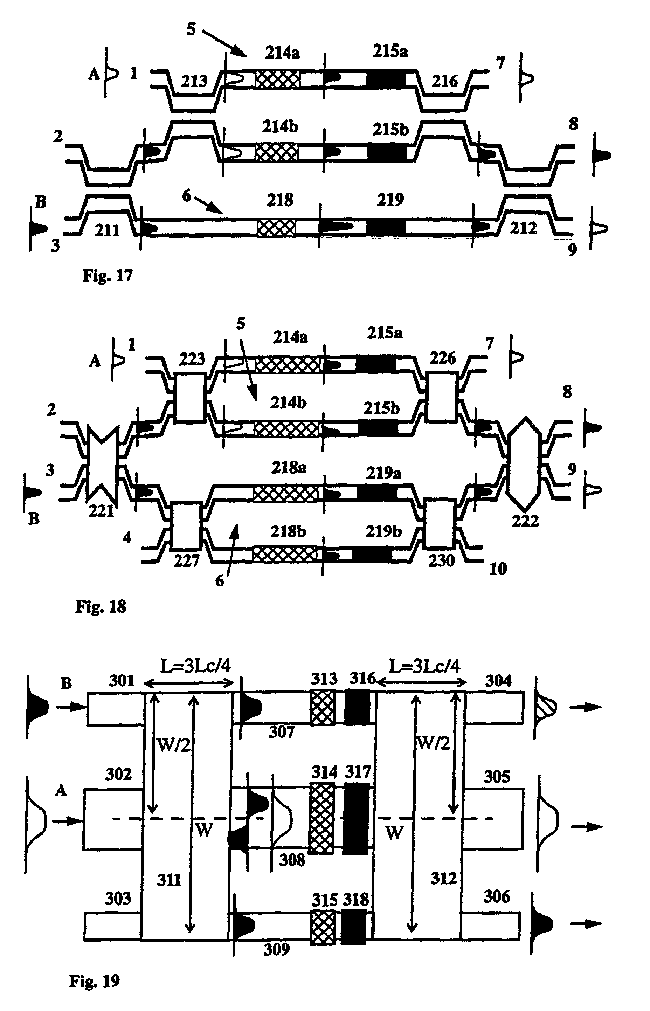

Das allgemeine Verfahren wird in Fig. 17 illustriert. Das Signal B wird z.B. am Eingang 3 eingekoppelt. Die Koppler 211 und 212 bilden ein Mach-Zehnder Interferometer (MZI), hier als "äusseres" MZI bezeichnet Um die nichtlinearen Intensitätsänderungen zu kompensieren und gute On/Off-Schaltverhältnisse für den Cross und den Bar Zustand im Schalter/Konverter zu erhalten, werden die Teilungsverhältnisse in den Kopplern 211 und 212 angepasst. Diese Arpassung wurde oben ausführlich erklärt. In einen Arm des MZI wird das Kontroll-Signal A eingekoppelt. Um dieses Signal vom Signal B zu unterscheiden, wird der Arm als zweites MZI, genannt "inneres" MZI, gebaut. Dieses basiert auf dem Moden-Mischer 213 und dem Entmischer 216. 213 und 216 sind Moden-Koppler mit symmetrischen Teilungsverhältnissen. Die Unterscheidung zwischen Signal B und dem Kontroll-Signal wird durch die unterschiedlichen relativen Phasen der Moden in den beiden Armen dieses "inneren" MZI gewährleistet. Optische nicht-lineare Bereiche 214a, 214b und 218 werden eingesetzt. Dies sind zum Beispiel optische Halbleiter-Verstärker. Die Bereiche 214a und 214b könnten auch zusammenhängend sein. Aktive oder passive Phasen-Shifter 215a, 215b und 219 werden irgendwo auf den "innern"-MZI-Armen angefügt, um die Interferenzen im Koppler 216 und 212 anzupassen. Mindestens einer der Phasen-Shifter 215a oder 215b wird gebraucht. Z.B. der Phasen-Shifter 215a wird so gewählt, dass das "innere" MZI im Bar-Zustand ist, d.h. der Eingang 1 geht in den Ausgang 7. Wegen der Symmetrie bleibt das "innere" MZI immer in diesem Bar-Zustand, egal ob das Kontroll-Signal eingekoppelt ist oder nicht. Der Phasen-Shifter 219 wird ohne Kontroll-Signal so gewählt, dass das Probe-Signal auf einem der Ausgänge 8 oder 9 herauskommt. Auch könnte zwischen dem Moden-Koppler 216 und 212 noch ein weiterer Phasen-Shifter angebracht sein. Das Kontroll-Signal bewirkt eine Intensitäts- und Phasen Aenderung zwischen dem "inneren" MZI und dem Arm 6. Die Intensitätsänderung kann durch die Wahl der Teilungsverhältnisse von 211 und 212 kompensiert werden (Text zu Fig. 15) oder/und die geeignete Wahl von Moden-Kopplern 211 und 212 mit verschieden starken nichtlinearen Bereichen auf den MZI-Armen des "äusseren" MZI (Text zu Fig. 16). Die Phasenänderung bewirkt das Schalten des Signal B zwischen den Ausgängen 8 und 9. Aus Symmetriegründen oder weil man ein zweites Kontroll-Signal einkoppeln möchte, kann ein zweites "inneres" MZI auf Arm 6 eingesetzt werden. Das gesamte Bauteil kann als rein optischer nicht-linearer 1x2-Schalter mit guten On/Off -Schaltverhältnissen wirken. Er ist kaskadierbar, da sowohl das Signal B als auch das Kontroll-Signal A wieder in anderen Bauteile gebraucht werden können oder zumindest relativ gut voneinander getrennt sind. Signal A und B können anschliessend wieder als Signal oder als Kontroll-Signal gebraucht werden. Sowohl das Signal B als auch das Kontroll-Signal A können in umgekehrter Richtung eingekoppelt werden, so dass der Schalter bidirektional gebraucht werden kann. Auf allen Figuren sind die Modeformen des Signals B und des Kontroll-Signal A dargestellt. Des Kontroll-Signal ist weiss gezeichnet. Das Signal B ist schwarz oder punktiert (am Ausgang 9) gezeichnet. Alle Verbindungswellenleiter enthalten nur Grundmoden.

In Fig. 18 ist ein Beispiel einer Konstruktion des Optisch-Optischen Schalters aus Fig. 17 gegeben. Als Moden-Koppler 223, 226, 227 und 230 für die "inneren" MZI werden 2x2-MMI mit 50:50 Teilungsverhältnissen verwendet. Mehrere Lösungen existieren dazu. Für die Moden-Koppler 221 und 222 werden "Butterfly"-MMIs verwendet. Falls keine oder nur kleine Intensitätsänderungen auftreten werden normale MMI mit einer rechteckigen Geometrie und symmetrischen Teilungsverhältnissen verwendet. Die Wahl der Teilungsverhältnisse erfolgt gemäss dem Text zu Fig. 15. Um die Konstruktion zu vereinfachen, könnte man die "innern"-MZI so konstruieren (Z.B. "innere"-MZI auf Kreisbögen setzen), dass ein Wegunterschied der einem π Phasenshift zwischen den MZI-Armen entspricht resultiert. Die Phasen-Shifter wären dann überflüssig. Es kann jedoch von Vorteil sein, wenn man dennoch Phasen-Shifter zur Korrektur von technologiebedingten oder Konstruktionsbedingten Phasen-Shifts einbaut.

Im folgenden wird ein kompakter, nur aus wenigen Komponenten bestehender XPM-Optisch-Optischer Schalter beschrieben.

Das Teilen des Signals B und das Einkoppeln des Kontroll-Signals A können durch ein einziges Bauteil, nämlich durch den Multi-Mode Interferenz MMI Moden-Koppler der Fig. 5a) erfolgen. Dasselbe MMI erlaubt das Vereinigen des Signals B und das Entkoppeln des Kontroll-Signals. Der mittlere Eingang 302, der mittlere Verbindungswellenleiter 308 und der mittlere Ausgang 305 sind im Zentrum beider MMI 311 und 312 plaziert. Diese Wellenleiter sollen so breit sein, dass sie Moden erster Ordnung führen können. Die äusseren Eingänge 301, 303, die äusseren Verbindungswellenleiter 307, 309 und die äusseren Ausgänge 304, 306 sind bündig oder zumindest fast bündig am MMI-Rand positioniert.

Das Signal B wird in einem Eingang ganz am Rand des Eingangs-MMI eingeführt. Das Signal B spaltet sich in 2 Grundmoden auf, die in den Wellenleitern 307 und 309 geführt werden und einen Moden erster Ordnung der im Wellenleiter 308 gerührt wird. Die Phasen müssen am Eingang des zweiten MMI adaptiert werden. Das kann mit Phasen-Shiftern 316, 317 und 318 passiv oder aktiv geschehen. Zum Beispiel kann passiv durch verschiedene Längen des Verbindungswellenleiters die folgende Bedingung erfüllt werden: Die äusseren Verbindungswellenleiter haben, am Eingang des zweiten MMIs, einen Phasenunterschied von $\pm\pi/2$ verglichen mit den inneren Verbindungswellenleiter Ohne Kontroll-Signal kommt dann das Licht in einem der äusseren Ausgänge heraus. Falls das Kontroll-Signal A angeschaltet ist, so führt dies zu einer Brechungsindex-Unterschied auf dem mittlern Verbindungswellenleiter 308, der im nichtlinearen Bereich 312 erzeugt wurde. Dadurch schaltet das Signal B vom einen äusseren Ausgangs-Wellenleiter zum ändern. Das Bauteil kann sowohl für das Kontroll-Signal A als auch für das Signal B bidirektional betrieben werden. Das Bauteil ist kaskadierbar, da die Signale A und B getrennt werden.

Das Problem der langsamen Ladungsträger-Rekombinationszeit, die die Schaltgeschwindigkeit reduziert, kann z.B. durch das Einführen eines zweiten, zeitlich verschobenen optischen Kontroll-Signals in den zweiten MZI oder MI- Arm gelöst werden. Alternativ kann man auch die 2 nichtlinearen Bereiche örtlich gegeneinander verschieben und anstattdessen die Kontroll-Signale zeitgleich auf die beiden MZI-Arme senden. Alle oben diskutierten erfindungsgemässen Schalter können auf diese Arten betrieben werden. Im folgenden werden Beispiele von Schaltern gegeben, die dieses Problem anders lösen. Nämlich indem die optischen Signale zeitlich verschoben auf den gleichen nichtlinearen Bereich geführt. werden. Die Schalter können polarisations-unabhängig konstruiert werden. Sie eignen sich besonders als Multiplexer, Demulitplexer oder aber auch zur Erzeugung von kurzen Pulsen.

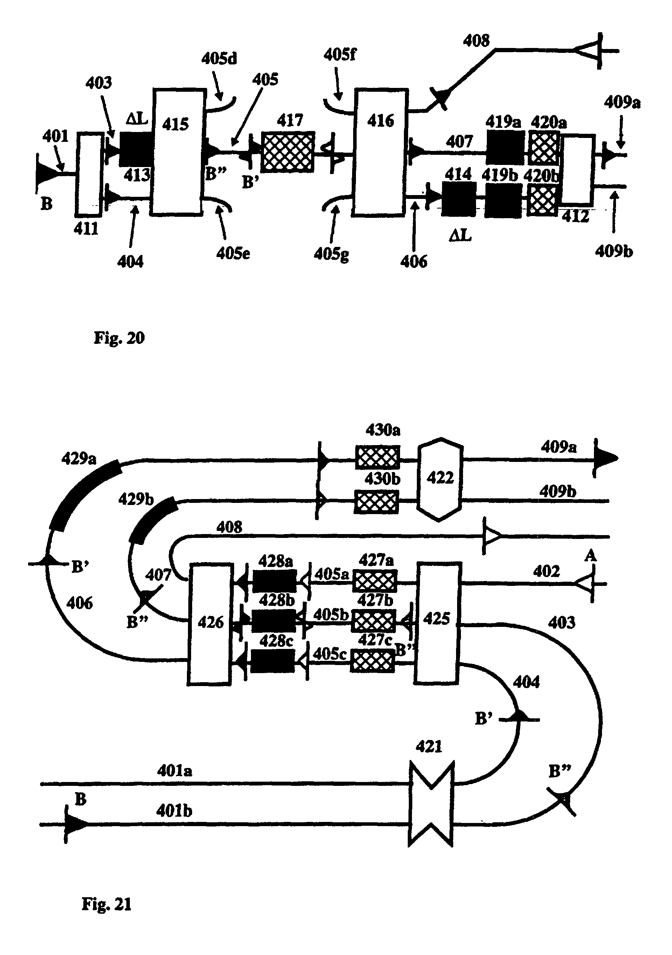

Fig. 20 zeigt ein Beispiel eines XPM-Optisch-Optischen Schalters, der ein Signal B in 2 durch die Ordnung des Mode unterscheidbare Anteile B' und B" aufspaltet und zeitlich verschoben auf den nichtlinearen Bereich 417 führt. Die Anordnung besteht aus 2 Moden-Kopplern 411 und 412, die das MZI bilden. Dies könnte z.B. eine MZI-Konfiguration gemäss dem Text zu Fig. 15 (mit 2 Eingängen) oder Fig. 16 (mit nur einem Eingang 401) sein. Ferner gibt es 2 Bereiche wo die Wellenleiter 403, 404 sowie 406, 407 so anzuordnen sind dass die beiden Signale B' und B" zeitlich getrennt und wieder aufeinander zugeführt werden. Dies könnte z.B. mit einem längeren Wellenleiterarm 413 und 414 gemacht werden. Zur Konversion und Rückkonversion des einen Signals in einen Mode erster Ordnung wird ein "Converter-Combiner-MMI" (415 und 416) verwendet, wie es im Text zu den Fig. 4a, 5b, 6, 7 und 8 vorgeschlagen wurde. Es ist von Vorteil, wenn mindestes einer der Koppler 415 oder 416 ein 4x4-Converter-Combiner-MMI gemäss Fig. 5a ist, so dass das Kontroll-Signal als Mode erster Ordnung eingekoppelt werden kann. Je nach Wahl des "Converter-Combiner-MMIs" 415 und 416 muss man noch Wellenleiter 405d-g hinzufügen, um Vertustmoden wegzuführen. Man könnte das Kontroll-Signal auch als Grundmode mit einem geeignet gewählten Koppler auf dem Wellenleiter-Arm 405 einkoppeln. Zur Korrektur der Intensitäten und der Phasen ist es von Vorteil, wenn man noch Phasenshifter 419a und 419b sowie Signal-Verstärker irgendwo zwischen dem Koppler 416 und 412 plaziert. Es ist zu berücksichtigen, dass der Grundmode und der Mode erster Ordnung evtl. nicht gleich stark verstärkt werden und auf dem Wellenleiter nicht zwingend die gleichen Brechungsindizes sehen.

Zur Funktionsweise des Schalters: Falls nach dem passieren des ersten Signals B' kein Kontroll-Signal in 417 eingekoppelt wird, erfährt das nachfolgende Signal B" keinen zusätzlichen Phasen-Shift. Falls hingegen bevor das Signal B" oder währenddem B" in 417 ist ein Kontroll-Signal vorhanden ist, so erfährt B" einen Phasen-Shift. Dies führt dazu, dass das Signal B von einem Ausgangswellenleiter auf den ändern schaltet.

Je nach Anordnung der Bauteile kann der Schalter auf beide Seiten betrieben werden. Im Bereich des Wellenleiters 405 kann man weitere Bauteile plazieren.

Fig. 21 zeigt eine mögliche Realisierung des Verfahrens von Fig. 20. Die zeitliche Trennung und wieder aufeinander Zuführung der Signale geschieht mittels Kurven underschiedlicher Radien und evtl. einer Translation von 403 respektive 429a gegenüber 404 respektive 429b. Die Koppler 425 und 426 sind 4x4-Converter-Combiner-MMIs (Fig. 5a). Diese Wahl macht es möglich das Signal vom Wellenleiter 404 zu fast 100% auf den Wellenleiter 406 und das Kontroll-Signal auf Wellenleiter 402 zu fast 100% auf 408 abzubilden. Die aktiven oder passiven Phasen-Shifter 428a-c können dabei zur richtigen Einstellung der Phasen auf den 3 Wellenleitern benutzt werden. 429a und b sind zusätzliche nützliche aber nicht notwendige Phasen-Shifter. Die Signal-Verstärker 430a und b sind nützlich, aber nicht unbedingt notwendig. Das Kontroll-Signal A führt zu einer Phasen- und Ladungsträgeränderung auf allen 3 nichtlinearen Bereichen. Für das Signal B" ist jedoch nur diejenige auf dem nichtlinearen Bereich 427b wichtig. Je nachdem wie stark diese Phasenänderung war, wird das Signal von Ausgang 409a auf Ausgang 409b und umgekehrt geschaltet. Die nicht-linearen Bereiche 427a-c müssen nicht die gleiche Geometrie haben.

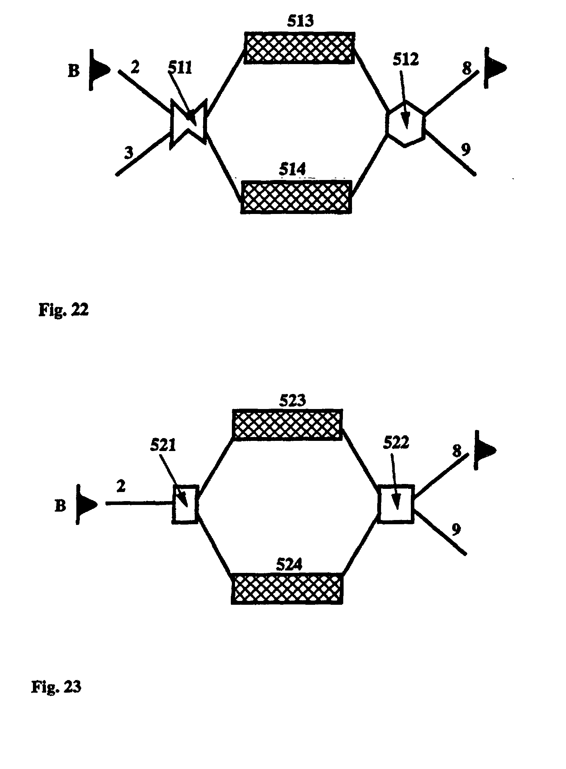

Die optisch kontrollierten Schalter gemäss dem Text zu Fig. 15 und Fig. 16 mit guten On/Off-Schaltverhältnissen können auch als elektrisch kontrollierte Schalter betrieben werden. Dabei entfallen gemäss der Fig. 22 und Fig. 23 die Ein- und Ausgänge sowie die Koppler für das optische Kontroll-Signal. Das MZI wird hingegen gemäss dem Verfahren von Fig. 15 und/oder Fig. 16 ausgebaut. Als nichtlineare Bereiche werden Halbleiter-Verstärker 513,514,523 und 524 eingesetzt. Die Brechungsindex- und Intensitäts-Aenderung wird nun durch Anlegen eines modulierbaren Stromes an einem der nichtlinearen Bereiche, z. B. 513 respektive 523 erzeugt. Der andere nichtlineare Bereich wird mit einem konstanten Strom gespiesen.

**Patentansprüche**

1. Integriert-optisches Bauteil zur Verarbeitung mindestens eines Eingangsmodes in mindestens einen Ausgangsmode, beinhaltend

ein Multi-Mode-Interferometer (19) mit zwei im Wesentlichen einander gegenüber liegenden Schmalseiten, und mindestens einen in eine erste Schmalseite mündenden Wellenleitereingang (11) für den mindestens einen Eingangsmode und mindestens einen in eine zweite Schmalseite mündenden Wellenleiterausgang (12, 13) für den mindestens einen Ausgangsmode, wobei

ein Wellenleitereingang (11) im Wesentlichen an einem Ende der ersten Schmalseite positioniert ist,

**dadurch gekennzeichnet, dass**

ein Wellenleiterausgang (12, 13) breiter ist als der genannte Wellenleitereingang (11), und

der Abstand dieses Wellenleiterausgangs (12, 13) von einem Ende der zweiten Schmalseite im Wesentlichen 2W/N oder ein ganzzahliges Vielfaches davon beträgt, worin W die effektive Breite der zweiten Schmalseite und N = 3, 4, 5, ... eine natürliche Zahl grösser als zwei ist.

2. Bauteil nach Anspruch 1, wobei das Multi-Mode-Interferometer (19) rechteckig ist und zwei Schmalseiten mit einer frei wählbaren effektiven Breite W sowie zwei Längsseiten aufweist, deren Länge L aus der Breite W gemäss

$$L = 3(1/N) \cdot 4nW^2/(3\lambda),$$

worin n den effektiven realen Brechungsindex und $\lambda$ die Vakuumwellenlänge des mindestens einen Eingangsmodes darstellt, resultiert.

3. Bauteil nach Anspruch 1 oder 2, mit mehreren in die erste Schmalseite mündenden Wellenleitereingängen (41-43) und/oder mit mehreren in die zweite Schmalseite mündenden Wellenleiterausgängen, wobei ein Wellenleitereingang (41) und/oder ein Wellenleiterausgang im Wesentlichen an einem Ende einer Schmalseite positioniert ist und die gegenseitigen Abstände der Wellenleitereingänge (41-43) und/oder der Wellenleiterausgänge im Wesentlichen 2W/N oder ein ganzzahliges Vielfaches davon betragen.

4. Bauteil nach Anspruch 3 mit N = 3K, worin K = 1, 2, 3, ... eine natürliche Zahl ist, zur Konversion von mehreren Eingangsmoden in (3K - 1)/2 Ausgangsmoden höherer Ordnung bei ungeradem K bzw. in (3K - 2)/2 Ausgangsmoden höherer Ordnung bei geradem K, mit mindestens einem zusätzlichen Wellenleitereingang (42, 43), welcher sich in einem Abstand von 2W/3 oder W/3 von einem Ende der ersten Schmalseite entfernt befindet.

5. Bauteil nach Anspruch 3 mit N = 4K, worin K = 1, 2, 3, ... eine natürliche Zahl ist, zur Konversion von mehreren Eingangsmoden in 2K - 1 Ausgangsmoden höherer Ordnung, mit mindestens einem zusätzlichen Wellenleitereingang (52), welcher sich in einem Abstand von W/2 von einem Ende der ersten Schmalseite entfernt befindet.

6. Bauteil nach Anspruch 5, wobei das Multi-Mode-Interferometer (69) drei Wellenleitereingänge (62, 65, 66) aufweist, von denen die beiden äusseren Wellenleitereingänge (65, 66) mit Wellenleiterausgängen eines 50:50-Modenteilers (63) optisch verbunden sind, und wobei zwischen mindestens einen Wellenleiterausgang des 50:50-Modenteilers (63) und mindestens einen äusseren Wellenleitereingang (66) des Multi-Mode-Interferometers (69) ein Phasenschieber (64) zwischengeschaltet ist.

7. Bauteil nach Anspruch 5, wobei das Multi-Mode-Interferometer (69) drei Wellenleitereingänge (75-77) aufweist, von denen die beiden äusseren Wellenleitereingänge (75, 76) mit Wellenleiterausgängen eines zweiten Multi-Mode-Interferometers (73), welches mindestens zwei Wellenleitereingänge (71, 72) und drei Wellenleiterausgänge (75-77) aufweist, optisch verbunden sind, und wobei zwischen mindestens einen Wellenleiterausgang (76) des zweiten Multi-Mode-Interferometers (73) und mindestens einen äusseren Wellenleitereingang (76) des ersten Multi-Mode-Interferometers (69) ein Phasenschieber (74) zwischengeschaltet ist.

8. Bauteil nach Anspruch 5, wobei das Multi-Mode-Interferometer (69) in unmittelbarer Nähe eines zweiten Multi-Mode-Interferometers (73) mit mindestens zwei Wellenleitereingängen (71, 72), welches im wesentlichen dieselbe Breite W wie das erste Multi-Mode-Interferometer (69) aufweist, angeordnet ist, derart, dass eine Schmalseite des ersten Multi-Mode-Interferometers (69) mit einer Schmalseite des zweiten Multi-Mode-Interferometers (73) zusammenfällt und die beiden Multi-Mode-Interferometer (69, 73) ohne gegenseitige Abgrenzung ineinander übergehen, und wobei die beiden Multi-Mode-Interferometer (69, 73) derart gegeneinander verdreht sind, dass für ungerade K Licht, welches entlang erster Längsseiten der Multi-Mode-Interferometer (69, 73) propagiert, gegenüber dem Licht, welches entlang zweiter Längsseiten der Multi-Mode-Interferometer (69, 73) propagiert, eine Phasenschiebung von 180° erreicht.

9. Integriert-optische Vorrichtung zum Gebrauch als kreuz-phasen-modulierter optisch-optischer Schalter, Wellenlängenkonverter oder Lichtsignal-Regenerator, beinhaltend
mindestens einen Wellenleitereingang (2, 3) für mindestens ein optisches Eingangssignal (B),
mindestens einem Wellenleiterausgang (8, 9) für mindestens ein optisches Ausgangssignal und
ein Interferometer zwischen dem mindestens einen Wellenleitereingang (2, 3) und dem mindestens einen Wellenleiterausgang (8, 9), wobei das Interferometer mindestens einen Modenvereiniger (113, 117) zum Einkoppeln eines Kontrollsignals (A) und mindestens ein optisch nichtlineares Material (114, 118) enthält,
**dadurch gekennzeichnet, dass**
der mindestens eine Modenvereiniger (113, 117) als Bauteil nach einem der Ansprüche 1-8 ausgebildet ist.

10. Vorrichtung nach Anspruch 9, wobei das Interferometer zumindest einen Phasenschieber (115, 119) enthält.

11. Vorrichtung nach Anspruch 9 oder 10, wobei das Interferometer ein Zweistrahl-Interferometer und insbesondere ein Mach-Zehnder-Interferometer oder ein Michelson-Interferometer ist.

12. Vorrichtung nach Anspruch 11, wobei das Zweistrahl-Interferometer mindestens einen Moden-Koppler (111, 112) zur Aufteilung des mindestens einen Eingangssignals (B) auf die Interferometer-Arme (5, 6) bzw. zur Vereinigung von Signalen aus den Interferometer-Armen (5, 6) aufweist, welcher mindestens eine Moden-Koppler (111, 112) derart ausgebildet ist, dass sein Teilverhältnis einen Wert aufweist, bei welchem das Ein-/Aus-Schaltverhältnis des Schalters optimal ist, insbesondere einen Wert ungleich 50:50 aufweist.

13. Vorrichtung nach Anspruch 12, wobei zwei Moden-Koppler (111, 112) mit unterschiedlichen Teilverhältnissen vorhanden sind, so dass durch geeignete Wahl der Teil Verhältnisse ein Offset in mindestens einem Phasenschieber (115, 119) eliminierbar ist.

14. Vorrichtung nach Anspruch 12, wobei mindestens ein Moden-Koppler (111, 112) als "Butterfly"-MMI ausgebildet ist.

15. Vorrichtung nach Anspruch 14, wobei zwei als im wesentlichen identische "Butterfly"-MMI ausgebildete Moden-Koppler (131, 132) vorhanden sind.

16. Vorrichtung nach Anspruch 14, wobei zwei als "Butterfly"-MMI mit im wesentlichen reziproken Teilungsverhältnissen ausgebildete Moden-Koppler (141, 142) vorhanden sind.

17. Vorrichtung nach Anspruch 9 oder 10, wobei das Interferometer einen zweiten Modenvereiniger (411) zum Aufteilen des Eingangssignals (B) in mindestens zwei Teilsignale (B', B") und einen dritten Modenvereiniger (412) zum Vereinigen mindestens zweier Teilsignale aufweist, und wobei zwischen dem zweiten Modenvereiniger (411) und dem mindestens einen optisch nichtlinearen Material (417) Mittel (413) zur zeitlichen Verzögerung eines Teilsignals (B") gegenüber einem anderen Teilsignal (B') und zwischen dem optisch nichtlinearen Material (417) und dem dritten Modenvereiniger (412) Mittel (414) zur Aufhebung dieser zeitlichen Verzögerung vorhanden sind.

18. Vorrichtung nach Anspruch 17, wobei der mindestens eine erste Modenvereiniger (415, 416) zum Einkoppeln eines Kontrollsignals (A) ein Bauteil nach Anspruch 4 ist.

19. Vorrichtung nach einem der Ansprüche 9-18, beinhaltend Mittel (116, 120), welche insbesondere als Bauteil nach einem der Ansprüche 1-8 ausgebildet sind, zum Herausfiltern des Kontrollsignals (A).

20. Integriert-optische Vorrichtung zum Gebrauch als kreuz-phasen-modulierter optisch-optischer Schalter, Wellenlängenkonverter oder Lichtsignal-Regenerator, beinhaltend
ein erstes optisches Schaltelement (311) mit mindestens zwei Wellenleitereingängen (301-303) und drei Wellenleiterausgängen (307-309) und
ein zweites optisches Schaltelement (312) mit mindestens drei Wellenleitereingängen und drei Wellenleiterausgängen (304-306), wobei
die drei Wellenleiterausgänge (307-309) des ersten optischen Schaltelementes (311) mit je einem Wellenleitereingang des zweiten optischen Schaltelementes (312) verbunden sind, und

zwischen mindestens einen Wellenleiterausgang (307-309) des ersten optischen Schaltelementes (311) und mindestens einen Wellenleitereingang des zweiten optischen Schaltelementes (312) ein optisch nichtlineares Material (313-315) und/oder ein Phasenschieber (316-318) zwischengeschaltet ist,

**dadurch gekennzeichnet, dass**

das erste optische Schaltelement (311) und das zweite optische Schaltelement (312) ein Bauteil nach Anspruch 5 ist.

21. Integriert-optische Vorrichtung zum Gebrauch als kreuz-phasen-modulierter optisch-optischer Schalter, Wellenlängenkonverter oder Lichtsignal-Regenerator, beinhaltend

mindestens einen Wellenleitereingang (2, 3) für mindestens ein optisches Eingangssignal (B),

mindestens einem Wellenleiterausgang (8, 9) für mindestens ein optisches Ausgangssignal,

ein erstes, zwei Arme (5, 6) beinhaltendes Interferometer zwischen dem mindestens einen Wellenleitereingang (2, 3) und dem mindestens einen Wellenleiterausgang (8, 9) und

ein integriert - optisches Bauteil nach einem der Ansprüche 1-8, das zwichen dem mindestens einen Wellenleitereingang (2, 3) und dem ersten Interferometer angeordnet ist, wobei

ein Arm (5) des ersten Interferometers ein zweites Interferometer mit mindestens einem Modenvereiniger (213, 216) zum Einkoppeln eines Kontrollsignals (A) und mindestens einem optisch nichtlinearen Material (214a, 214b) enthält.

22. Vorrichtung nach Anspruch 21, wobei das zweite Interferometer ein Zweistrahl-Interferometer, insbesondere ein Mach-Zehnder-Interferometer, ist.

23. Vorrichtung nach Anspruch 22, wobei zumindest ein Arm (5, 6) des zweiten Interferometers einen Phasenschieber (215a, 215b) enthält.

24. Verwendung des Bauteils nach einem der Ansprüche 1-8 zur Konversion von optischen Moden niederer Ordnung in optische Moden höherer Ordnung.

25. Integriert-optisches Verfahren zur Umwandlung mindestens eines Eingangsmodes einer niederen Ordnung in mindestens einen Ausgangsmode einer höheren Ordnung, mit den folgenden Verfahrensschritten:

(a) Bereitstellen eines Multi-Mode-Interferometers (19), welches zwei im Wesentlichen einander gegenüber liegende Schmalseiten aufweist;

(b) Einkoppeln des Eingangsmodes durch einen in eine erste Schmalseite des Multi-Mode-Interferometers (19) mündenden Wellenleitereingang (11) in das Multi-Mode-Interferometer (19), wobei der Wellenleitereingang (11) im Wesentlichen an einem Ende der ersten Schmalseite positioniert ist; und

(c) Auskoppeln des Ausgangsmodes durch einen in eine zweite Schmalseite des Multi-Mode-Interferometers (19) mündenden Wellenleiterausgang (12, 13) aus dem Multi-Mode-Interferometer (19);

**dadurch gekennzeichnet, dass**

der Ausgangsmode durch einen Wellenleiterausgang (12, 13) ausgekoppelt wird, welcher breiter ist als der Wellenleitereingang (11), und

der Abstand dieses Wellenleiterausgangs (12, 13) von einem Ende der zweiten Schmalseite im Wesentlichen 2W/N oder ein ganzzahliges Vielfaches davon beträgt, worin W die effektive Breite der zweiten Schmalseite und N = 3, 4, 5, ... eine natürliche Zahl grösser als zwei ist.

26. Verfahren nach Anspruch 25, wobei ein rechteckiges Multi-Mode-Interferometer (19) bereitgestellt wird, welches zwei Schmalseiten mit einer frei wählbaren effektiven Breite W sowie zwei Längsseiten aufweist, deren Länge L aus der Breite W gemäss

$$L = 3(1/N) \cdot 4nW^2/(3\lambda),$$

worin n den effektiven realen Brechungsindex und $\lambda$ die Vakuumwellenlänge des mindestens einen Eingangsmodes darstellt, resultiert.

**27.** Verfahren nach Anspruch 25 oder 26 mit N = 3K, worin K = 1, 2, 3, ... eine natürliche Zahl ist, zur Konversion von mehreren Eingangsmoden in (3K - 1)/2 Ausgangsmoden höherer Ordnung bei ungeradem K bzw. in (3K - 2)/2 Ausgangsmoden höherer Ordnung bei geradem K, wobei die Eingangsmoden durch mindestens einen zusätzlichen Wellenleitereingang (42, 43), welcher sich in einem Abstand von 2W/3 oder W/3 von einem Ende der ersten Schmalseite entfernt befindet, eingekoppelt werden.

**28.** Verfahren nach Anspruch 25 oder 26 mit N = 4K, worin K = 1, 2, 3, ... eine natürliche Zahl ist, zur Konversion von mehreren Eingangsmoden in 2K - 1 Ausgangsmoden höherer Ordnung, wobei die Eingangsmoden durch mindestens einen zusätzlichen Wellenleitereingang (52), welcher sich in einem Abstand von W/2 von einem Ende der ersten Schmalseite entfernt befindet, eingekoppelt werden.

**29.** Verfahren nach Anspruch 28, wobei ein Multi-Mode-Interferometer (69) mit drei Wellenleitereingängen (62, 65, 66) bereitgestellt wird, ein erster Eingangsmode (A) in einem 50:50-Modenteilers (63) auf die beiden äusseren Wellenleitereingänge (65, 66) aufgeteilt wird, die Phase des Modes in einem (66) dieser äusseren Wellenleitereingänge (65, 66) gegenüber dem Mode im anderen (65) dieser äusseren Wellenleitereingänge (65, 66) um 180° für ungerade Zahlen K bzw. um 0° für gerade Zahlen K geschoben wird, und ein zweiter Eingangsmode (B) durch den mittleren Wellenleitereingang (62) eingekoppelt wird.

**30.** Verfahren nach Anspruch 28, wobei ein Multi-Mode-Interferometer (69) mit drei Wellenleitereingängen (75-77) bereitgestellt wird, von denen die beiden äusseren Wellenleitereingänge (75, 76) mit Wellenleiterausgängen eines zweiten Multi-Mode-Interferometers (73), welches mindestens zwei Wellenleitereingänge (71, 72) und drei Wellenleiterausgänge (75-77) aufweist, optisch verbunden sind, wobei ein erster Eingangsmode durch einen ersten Wellenleitereingang (71) und ein zweiter Eingangsmode durch einen zweiten Wellenleitereingang (72) in das zweite Multi-Mode-Interferometer (73) eingekoppelt wird und wobei die Phase des Modes in einem (76) der äusseren Weilenleitereingänge (75, 76) des ersten Multi-Mode-Interferometers (69) gegenüber dem Mode im anderen (75) dieser äusseren Wellenleitereingänge (75, 76) um 180° für ungerade Zahlen K bzw. um 0° für gerade Zahlen K geschoben wird.

**31.** Verfahren nach Anspruch 30, wobei das erste (69) und das zweite (73) Multi-Mode-Interferometer mit im wesentlichen derselben Breite W bereitgestellt und zueinander verschoben werden, bis eine Schmalseite des ersten Multi-Mode-Interferometers (69) mit einer Schmalseite des zweiten Multi-Mode-Interferometers (73) zusammenfällt, die Wellenleitereingänge des ersten Multi-Mode-Interferometers (69) verschwinden und die beiden Multi-Mode-Interferometer (69, 73) ohne gegenseitige Abgrenzung ineinander übergehen, und wobei die beiden Multi-Mode-Interferometer (69, 73) derart gegeneinander verdreht werden, dass für ungerade Zahlen K Licht, welches entlang erster Längsseiten der Multi-Mode-Interferometer (69, 73) propagiert, gegenüber dem Licht, welches entlang zweiter Längsseiten der Multi-Mode-Interferometer (69, 73) propagiert, eine Phasenschiebung von 180° erreicht.

**Claims**

**1.** An integrated-optical component for the processing of at least one input mode into at least one output mode, comprising
a multimode interferometer (19) with two narrow edges essentially opposing each other, and
at least one waveguide input (11) for the at least one input mode, leading into a first narrow edge, and at least one waveguide output (12, 13) for the at least one output mode, leading into a second narrow edge,
a waveguide input (11) being positioned essentially on one end of the first narrow edge,
**characterized in that**
a waveguide output (12, 13) is wider than said waveguide input (11), and
the distance from this waveguide output (12, 13) to one end of the second narrow edge is essentially 2W/N or an integral multiple thereof, wherein W is the effective width of the second narrow edge and N = 3, 4, 5, ... is a natural number larger than two.

**2.** The component according to claim 1, wherein the multimode interferometer (19) is rectangular and has two narrow edges with a freely selectable effective width W and two longitudinal edges, the length L of which results from the width W according to

$$L=3(1/N)\cdot 4nW^2/(3\lambda),$$

wherein n represents the effective real refractive index and λ the vacuum wavelength of the at least one input mode.

3. The component according to claim 1 or 2, with a plurality of waveguide inputs (41-43) leading into the first narrow edge and/or with a plurality of waveguide outputs leading into the second narrow edge, wherein a waveguide input (41) and/or a waveguide output is positioned essentially on one end of a narrow edge and the mutual distances of the waveguide inputs (41-43) and/or the waveguide outputs are essentially 2W/N or an integral multiple thereof.

4. The component according to claim 3 with N = 3K, wherein K = 1, 2, 3, ... is a natural number, for the conversion of a plurality of input modes into (3K - 1)/2 higher-order output modes for odd K or into (3K - 2)/2 higher-order output modes for even K, respectively, with at least one additional waveguide input (42, 43) which is positioned at a distance of 2W/3 or W/3 from one end of the first narrow edge.

5. The component according to claim 3 with N = 4K, wherein K = 1, 2, 3, ... is a natural number, for the conversion of a plurality of input modes into 2K - 1 higher-order output modes, with at least one additional waveguide input (52) which is positioned at a distance of W/2 from one end of the first narrow edge.

6. The component according to claim 5, wherein the multimode interferometer (69) has three waveguide inputs (62, 65, 66), the two outer waveguide inputs (65, 66) of which are optically connected to waveguide outputs of a 50:50 mode splitter (63), and wherein a phase shifter (64) is inserted between at least one waveguide output of the 50:50 mode splitter (63) and at least one outer waveguide input (66) of the multimode interferometer (69).

7. The component according to claim 5, wherein the multimode interferometer (69) has three waveguide inputs (75-77), the two outer waveguide inputs (75, 76) of which are optically connected to waveguide outputs of a second multimode interferometer (73) which has at least two waveguide inputs (71, 72) and three waveguide outputs (75-77), and wherein a phase shifter (74) is inserted between at least one waveguide output (76) of the second multimode interferometer (73) and at least one outer waveguide input (76) of the first multimode interferometer (69).

8. The component according to claim 5, wherein the multimode interferometer (69) is arranged in the immediate neighbourhood of a second multimode interferometer (73) with at least two waveguide inputs (71, 72) which has essentially the same width W as the first multimode interferometer (69), such that a narrow edge of the first multimode interferometer (69) overlaps with a narrow edge of the second multimode interferometer (73) and both multimode interferometers (69, 73) merge with each other without any mutual boundary, and wherein both multimode interferometers (69, 73) are rotated with respect to each other such that, for odd K, light propagating along first longitudinal edges of the multimode interferometers (69, 73) experiences a phase shift of 180° with respect to the light propagating along second longitudinal edges of the multimode interferometers (69, 73).

9. An integrated-optical device for use as crossphase-modulated optical-optical switch, wavelength converter or light-signal regenerator, comprising
at least one waveguide input (2, 3) for at least one optical input signal (B),
at least one waveguide output (8, 9) for at least one optical output signal and
an interferometer inserted between the at least one waveguide input (2, 3) and the at least one waveguide output (8, 9), the interferometer including at least one mode combiner (113, 117) for incoupling a control signal (A), and at least one optically nonlinear material (114, 118),
**characterized in that**
the at least one mode combiner (113, 117) is designed as a component according to one of the claims 1-8.

10. The device according to claim 9, wherein the interferometer comprises at least one phase shifter (115, 119).

11. The device according to claim 9 or 10, wherein the interferometeris a two-path interferometer and particularly a Mach-Zehnder interferometer or a Michelson interferometer.

12. The device according to claim 11, wherein the two-path interferometer has at least one mode coupler (111, 112) for splitting the at least one input signal (B) into two interferometer arms (5, 6) or for combining signals from the interferometer arms (5, 6), which at least one mode coupler (111, 112) is designed such that its splitting ratio has a value for which the on/off switching ratio of the switch is optimum, and particularly has a value unequal to 50:50.

13. The device according to claim 12, wherein two mode couplers (111, 112) with splitting ratios different from each other are present, so as to eliminate an offset in at least one phase shifter (115, 119) by appropriate choice of the splitting ratios.

14. The device according to claim 12, wherein at least one mode coupler (111, 112) is designed as a butterfly MMI.

15. The device according to claim 14, wherein two mode couplers (131, 132) designed as essentially identical butterfly MMIs are present.

16. The device according to claim 14, wherein two mode couplers (141, 142) designed as butterfly MMIs with essentially reciprocal splitting ratios are present.

17. The device according to claim 9 or 10, wherein the interferometer has a second mode combiner (411) for splitting the input signal (B) into at least two partial signals (B', B") and a third mode combiner (412) for combining at least two partial signals, and wherein means (413) for introducing a temporal delay of a partial signal (B") with respect to another partial signal (B') are inserted between the second mode combiner (411) and the at least one optically nonlinear material (417), and means (414) for cancelling said temporal delay are inserted between optically nonlinear material (417) and the third mode combiner (412).

18. The device according to claim 17, wherein the at least one firs mode combiner (415, 416) for incoupling a control signal (A) is a component according to claim 4.

19. The device according to one of the claims 9-18, comprising means (116, 120), which are particularly designed as a component according to one of the claims 1-8, for filtering out the control signal (A).

20. An integrated-optical device for use as crossphase-modulated optical-optical switch, wavelength converter or light-signal regenerator, comprising
a first optical switching element (311) with at least two waveguide inputs (301-303) and three waveguide outputs (307-309) and
a second optical switching element (312) with at least three waveguide inputs and three waveguide outputs (304-306), wherein
the three waveguide outputs (307-309) of the first optical switching element (311) are each connected to a waveguide input of the second optical switching element (312), and
an optically nonlinear material (313-315) and/or a phase shifter (316-318) is inserted between at least one waveguide output (307-309) of the first optical switching element (311) and at least one waveguide input of the second optical switching element (312),
**characterized in that**
the first optical switching element (311) and the second optical switching element (312) is a component according to claim 5.

21. An integrated-optical device for use as crossphase-modulated optical-optical switch, wavelength converter or light-signal regenerator, comprising
at least one waveguide input (2, 3) for at least one optical input signal (B),
at least one waveguide output (8, 9) for at least one optical output signal,
a first interferometer, comprising two arms (5, 6), inserted between the at least one waveguide input (2, 3) and the at least one waveguide output (8, 9), and
an integrated-optical component according to one of the claims 1-8, arranged between the at least one waveguide input (2, 3) and the first interferometer, wherein
one arm (5) of the first interferometer includes a second interferometer with at least one mode combiner (213, 216) for incoupling a control signal (A), and at least one optically nonlinear material (214a, 214b).

22. The device according to claim 21, wherein the second interferometer is a two-path interferometer, particularly a Mach-Zehnder interferometer.

23. The device according to claim 22, wherein at least one arm (5, 6) or the second interferometer includes a phase shifter (215a, 215b).

24. Use of the component according to one of the claims 1-8 for the conversion of lower-order optical modes into higher-order optical modes.

25. An integrated-optical method for converting at least one lower-order input mode into at least one higher-order output mode, with the following steps:

   (a) providing a multimode interferometer (19) having two narrow edges essentially opposing each other;

   (b) incoupling the input mode through a waveguide input (11) leading into a first narrow edge of the multimode interferometer (19) into the multimode interferometer (19), wherein the waveguide input (11) is positioned essentially on an end of the first narrow edge; and

   (c) outcoupling the output mode through a waveguide output (12, 13) leading into a second narrow edge of the multimode interferometer (19) from the multimode interferometer (19);

   **characterized in that**
   the output mode is outcoupled through a waveguide output (12, 13) which is wider than said waveguide input (11), and
   the distance from this waveguide output (12, 13) to one end of the second narrow edge is essentially 2W/N or an integral multiple thereof, wherein W is the effective width of the second narrow edge and N = 3, 4, 5, ... is a natural number larger than two.

26. The method according to claim 25, wherein a rectangular multimode interferometer (19) is provided, which has two narrow edges with a freely selectable effective width W and two longitudinal edges, the length L of which results from the width W according to

$$L=3(1/N)\cdot 4nW^2/(3\lambda),$$

   wherein n represents the effective real refractive index and $\lambda$ the vacuum wavelength of the at least one input mode.

27. The method according to claim 25 or 26 with N = 3K, wherein K = 1, 2, 3, ... is a natural number, for the conversion of a plurality of input modes into (3K - 1)/2 higher-order output modes for odd K or into (3K - 2)/2 higher-order output modes for even K, respectively, wherein the input modes are incoupled through at least one additional waveguide input (42, 43) which is positioned at a distance of 2W/3 or W/3 from one end of the first narrow edge.

28. The method according to claim 25 or 26 with N = 4K, wherein K = 1, 2, 3, ... is a natural number, for the conversion of a plurality of input modes into 2K - 1 higher-order output modes, wherein the input modes are incoupled through at least one additional waveguide input (52) which is positioned at a distance of W/2 from one end of the first narrow edge.

29. The method according to claim 28, wherein a multimode interferometer (69) having three waveguide inputs (62, 65, 66) is provided, a first input mode (A) is split in a 50:50 mode splitter (63) into the two outer waveguide inputs (65, 66), the phase of the mode in one of these outer waveguide inputs (65, 66) is shifted with respect to the mode in the other of these outer waveguide inputs (65, 66) by 180° for odd numbers K and by 0° for even numbers K, respectively, and a second input mode (B) is incoupled through the central waveguide input (62).

30. The method according to claim 28, wherein a multimode interferometer (69) with three waveguide inputs (75-77) is provided, the two outer waveguide inputs (75, 76) of which are optically connected to waveguide outputs of a second multimode interferometer (73) which has at least two waveguide inputs (71, 72) and three waveguide outputs (75-77), wherein a first input mode is incoupled through a first waveguide input (71) and a second input mode is coupled through a second waveguide input (72) into the second multimode interferometer (73), and wherein the phase of the mode in one (76) of the outer waveguide inputs (75, 76) of the multimode interferometer (69) is shifted with respect to the mode in the other (75) of these outer waveguide inputs (75, 76) by 180° for odd numbers K and by 0° for even numbers K, respectively.

31. The method according to claim 30, wherein the first (69) and the second (73) multimode interferometers are provided with essentially the same width W and are displaced with respect to each other until a narrow edge of the first multimode interferometer (69) overlaps with a narrow edge of the second multimode interferometer (73), the waveguide inputs of the first multimode interferometer (69) disappear and both multimode interferometers (69, 73) merge with each other without any mutual boundary, and wherein both multimode interferometers (69, 73) are rotated with respect to each other such that, for odd numbers K, light propagating along first longitudinal edges of the multimode interferometers (69, 73) experiences a phase shift of 180° with respect to the light propagating along second longitudinal edges of the multimode interferometers (69, 73).

**Revendications**

1. Composant optique intégré pour la conversion d'au moins un mode d'entrée en au moins un mode de sortie, contenant

   un interféromètre multimode (19) ayant deux petits côtés essentiellement opposés et

   au moins une entrée de guide d'ondes (11) aboutissant sur un premier petit côté pour le(s) mode(s) d'entrée et au moins une sortie de guide d'ondes (12, 13) aboutissant sur un deuxième petit côté pour le(s) mode(s) de sortie,

   une entrée de guide d'ondes (11) étant positionnée essentiellement à une extrémité du premier petit côté,

   **caractérisé par le fait que**

   une sortie de guide d'ondes (12, 13) est plus large que l'entrée de guide d'ondes (11) mentionnée et

   la distance de cette sortie de guide d'ondes (12, 13) à une extrémité du deuxième petit côté est essentiellement égale à 2W/N ou à un multiple entier de ce nombre, où W est la largeur effective du deuxième petit côté et N = 3, 4, 5, ... un entier naturel supérieur à 2.

2. Composant selon la revendication 1, dans lequel l'interféromètre multimode (19) est rectangulaire et présente deux petits côtés de largeur effective W quelconque ainsi que deux grands côtés dont la longueur L résulte de la largeur W selon la formule

$$L = 3(1/N).4nW^2/(3\lambda)$$

   dans laquelle n représente l'indice de réfraction réel et $\lambda$ la longueur d'ondes dans le vide du/des mode(s) d'entrée.

3. Composant selon la revendication 1 ou 2, avec plusieurs entrées de guide d'ondes (41-43) aboutissant sur le premier petit côté et/ou plusieurs sorties de guide d'ondes aboutissant sur le deuxième petit côté, une entrée de guide d'ondes (41) et/ou une sortie de guide d'ondes étant positionnée essentiellement à une extrémité d'un petit côté et les distances opposées des entrées de guide d'ondes (41-43) et/ou des sorties de guide d'ondes étant essentiellement égales à 2W/N ou à un multiple entier de ce nombre.

4. Composant selon la revendication 3 avec N = 3K, où K = 1, 2, 3, ... un entier naturel, pour la conversion de plusieurs modes d'entrée en (3K - 1)/2 modes de sortie d'ordre supérieur si K est impair ou en (3K - 2)/2 modes de sortie d'ordre supérieur si K est pair, avec au moins une entrée de guide d'ondes supplémentaire (42, 43) qui se trouve à une distance égale à 2W/3 ou W/3 d'une extrémité du premier petit côté.

5. Composant selon la revendication 3 avec N = 4K, où K = 1, 2, 3, ... un entier naturel, pour la conversion de plusieurs modes d'entrée en 2K - 1 modes de sortie d'ordre supérieur, avec au moins une entrée de guide d'ondes supplémentaire (52) qui se trouve à une distance égale à W/2 d'une extrémité du premier petit côté.

6. Composant selon la revendication 5, dans lequel l'interféromètre multimode (69) présente trois entrées de guide d'ondes (62, 65, 66) dont les deux entrées de guide d'ondes extérieures (65, 66) sont reliées optiquement aux sorties de guide d'ondes d'un séparateur de mode 50:50 (63) et dans lequel un déphaseur (64) est intercalé entre au moins une sortie de guide d'ondes du séparateur de mode 50:50 (63) et au moins une entrée de guide d'ondes extérieure (66) de l'interféromètre multimode (69).

7. Composant selon la revendication 5, dans lequel l'interféromètre multimode (69) présente trois entrées de guide d'ondes (75-77) dont les deux entrées de guide d'ondes extérieures (75, 76) sont reliées optiquement aux sorties de guide d'ondes d'un deuxième interféromètre multimode (73), lequel présente au moins deux entrées de guide d'ondes (71, 72) et trois sorties de guide d'ondes (75-77), et dans lequel un déphaseur (74) est intercalé entre au moins une sortie de guide d'ondes (76) du deuxième interféromètre multimode (73) et au moins une entrée de guide d'ondes extérieure (76) du premier interféromètre multimode (69).

**8.** Composant selon la revendication 5, dans lequel l'interféromètre multimode (69) est disposé à proximité immédiate d'un deuxième interféromètre multimode (73) ayant au moins deux entrées de guide d'ondes (71, 72), lequel présente essentiellement la même largeur W que le premier interféromètre multimode (69), de telle façon qu'un petit côté du premier interféromètre multimode (69) coïncide avec un petit côté du deuxième interféromètre multimode (73) et que les deux interféromètres multimodes (69, 73) se raccordent sans délimitation mutuelle, et dans lequel les deux interféromètres multimodes (69, 73) sont tournés l'un par rapport à l'autre de telle façon que pour K impair, la lumière qui se propage le long de premiers grands côtés des interféromètres multimodes (69, 73) est déphasée de 180° par rapport à la lumière qui se propage le long de deuxièmes grands côtés des interféromètres multimodes (69, 73).

**9.** Dispositif optique intégré destiné à être utilisé comme commutateur optique-optique à modulation de phase croisée, convertisseur de longueurs d'ondes ou régénérateur de signaux lumineux, contenant
au moins une entrée de guide d'ondes (2, 3) pour au moins un signal d'entrée optique (B),
au moins une sortie de guide d'ondes (8, 9) pour au moins un signal de sortie optique et
un interféromètre entre la ou les entrée(s) de guide d'ondes (2, 3) et la ou les sortie(s) de guide d'ondes (8, 9), l'interféromètre contenant au moins un mélangeur de modes (113, 117) pour l'injection d'un signal de contrôle (A) et au moins un matériau optiquement non linéaire (114, 118),
**caractérisé par le fait que**
le ou les mélangeur(s) de modes (113, 117) est/sont formé(s) d'un composant selon l'une des revendications 1 à 8.

**10.** Dispositif selon la revendication 9, dans lequel l'interféromètre contient au moins un déphaseur (115, 119).

**11.** Dispositif selon la revendication 9 ou 10, dans lequel l'interféromètre est un interféromètre à deux faisceaux et en particulier un interféromètre de Mach-Zender ou un interféromètre de Michelson.

**12.** Dispositif selon la revendication 11, dans lequel l'interféromètre à deux faisceaux présente au moins un coupleur de modes (111, 112) pour la répartition du ou des signaux d'entrée (B) sur les bras d'interféromètre (5, 6) ou pour le mélange des signaux issus des bras d'interféromètre (5, 6), ce(s) coupleur(s) de modes (111, 112) étant ainsi formé(s) que son/leur rapport de division présente une valeur pour laquelle le rapport activation/désactivation du commutateur est optimal et présente en particulier une valeur différente de 50:50.

**13.** Dispositif selon la revendication 12, présentant deux coupleurs de modes (111, 112) ayant des rapports de division différents, de sorte qu'il est possible d'éliminer un décalage dans au moins un déphaseur (115, 119) par un choix approprié des rapports de division.

**14.** Dispositif selon la revendication 12, dans lequel au moins un coupleur de modes (111, 112) est un MMI « butterfly ».

**15.** Dispositif selon la revendication 14, présentant au moins deux coupleurs de modes (131, 132) MMI « butterfly » essentiellement identiques.

**16.** Dispositif selon la revendication 14, présentant au moins deux coupleurs de modes (141, 142) MMI « butterfly » ayant des rapports de division essentiellement réciproques.

**17.** Dispositif selon la revendication 9 ou 10, dans lequel l'interféromètre présente un deuxième mélangeur de modes (411) pour diviser le signal d'entrée (B) en au moins deux sous-signaux (B', B") et un troisième mélangeur de modes (412) pour mélanger au moins deux sous-signaux, et dans lequel il existe entre le deuxième mélangeur de modes (411) et le(s) matériau(x) optiquement non linéaire(s) des moyens (413) pour retarder un sous-signal (B") par rapport à un autre sous-signal (B'), et entre le matériau optiquement non linéaire (417) et le troisième mélangeur de modes (412) des moyens (414) pour supprimer ce retard.

**18.** Dispositif selon la revendication 17, dans lequel le(s) premier(s) mélangeur(s) de modes (415, 416) pour l'injection d'un signal de contrôle (A) est/sont un composant selon la revendication 4.

**19.** Dispositif selon l'une des revendications 9 à 18, contenant des moyens (116, 120), qui sont en particulier des composants selon l'une des revendications 1 à 8, pour filtrer le signal de contrôle (A).

**20.** Dispositif optique intégré destiné à être utilisé comme commutateur optique-optique à modulation de phase croisée, convertisseur de longueurs d'ondes ou régénérateur de signaux lumineux, contenant

un premier élément de commutation optique (311) avec au moins deux entrées de guide d'ondes (301-303) et trois sorties de guide d'ondes (307-309) et

un deuxième élément de commutation optique (312) avec au moins trois entrées de guide d'ondes et trois sorties de guide d'ondes (304-306),

les trois sorties de guide d'ondes (307-309) du premier élément de commutation optique (311) étant reliées chacune à une entrée de guide d'ondes du deuxième élément de commutation optique (312), et

un matériau optiquement non linéaire (313-315) et/ou un déphaseur (316-318) étant intercalé entre au moins une sortie de guide d'ondes (307-309) du premier élément de commutation optique (311) et au moins une entrée de guide d'ondes du deuxième élément de commutation optique (312),

**caractérisé par le fait que**

le premier élément de commutation optique (311) et le deuxième élément de commutation optique (312) sont des composants selon la revendication 5.

21. Dispositif optique intégré destiné à être utilisé comme commutateur optique-optique à modulation de phase croisée, convertisseur de longueurs d'ondes ou régénérateur de signaux lumineux, contenant

au moins une entrée de guide d'ondes (2, 3) pour au moins un signal d'entrée optique (B),

au moins une sortie de guide d'ondes (8, 9) pour au moins un signal de sortie optique,

un premier interféromètre contenant deux bras (5, 6) entre la/les entrée(s) de guide d'ondes (2, 3) et la/les sortie(s) de guide d'ondes (8, 9) et

un composant optique intégré selon l'une des revendications 1-8, disposé entre au moins une entrée de guide d'ondes (2, 3) et le premier interféromètre,

un bras (5) du premier interféromètre contenant un deuxième interféromètre avec au moins un mélangeur de modes (213, 216) pour l'injection d'un signal de contrôle (A) et au moins un matériau optiquement non linéaire (214a, 214b).

22. Dispositif selon la revendication 21, dans lequel le deuxième interféromètre est un interféromètre à deux faisceaux, en particulier un interféromètre de Mach-Zender.

23. Dispositif selon la revendication 22, dans lequel au moins un bras (5, 6) du deuxième interféromètre contient un déphaseur (215a, 215b).

24. Utilisation du composant selon l'une des revendications 1 à 8 pour la conversion de modes optiques d'ordre inférieur en modes optiques d'ordre supérieur.

25. Procédé optique intégré pour la conversion d'au moins un mode d'entrée d'un ordre inférieur en au moins un mode de sortie d'un ordre supérieur, comprenant les étapes suivantes :

(a) mise à disposition d'un interféromètre multimode (19) présentant deux petits côtés essentiellement opposés ;

(b) injection du mode d'entrée dans l'interféromètre multimode (19) par une entrée de guide d'ondes (11) aboutissant sur un premier petit côté de l'interféromètre multimode (19), l'entrée de guide d'ondes (11) étant positionnée essentiellement à une extrémité du premier petit côté et

(c) extraction du mode de sortie de l'interféromètre multimode (19) par une sortie de guide d'ondes (12, 13) aboutissant sur un deuxième petit côté de l'interféromètre multimode (19);

**caractérisé par le fait que**

le mode de sortie est extrait par une sortie de guide d'ondes (12, 13) plus large que l'entrée de guide d'ondes (11) et que

la distance de cette sortie de guide d'ondes (12, 13) à une extrémité du deuxième petit côté est essentiellement égale à 2W/N ou à un multiple entier de ce nombre, où W est la largeur effective du deuxième petit côté et N = 3, 4, 5, ... un entier naturel supérieur à 2.

26. Procédé selon la revendication 25, dans lequel il est mis à disposition un interféromètre multimode (19) rectangulaire qui présente deux petits côtés de largeur effective W quelconque ainsi que deux grands côtés dont la longueur L résulte de la largeur W selon la formule

$$L = 3(1/N).4nW^2/(3\lambda)$$

dans laquelle n représente l'indice de réfraction réel et $\lambda$ la longueur d'ondes dans le vide du/des mode(s) d'entrée.

27. Procédé selon la revendication 25 ou 26 avec N = 3K, où K = 1, 2, 3, ... un entier naturel, pour la conversion de plusieurs modes d'entrée en (3K - 1)/2 modes de sortie d'ordre supérieur si K est impair ou en (3K - 2)/2 modes de sortie d'ordre supérieur si K est pair, les modes d'entrée étant injectés par au moins une entrée de guide d'ondes supplémentaire (42, 43) qui se trouve à une distance égale à 2W/3 ou W/3 d'une extrémité du premier petit côté.

28. Procédé selon la revendication 25 ou 26 avec N = 4K, où K = 1, 2, 3,... un entier naturel, pour la conversion de plusieurs modes d'entrée en 2K - 1 modes de sortie d'ordre supérieur, les modes d'entrée étant injectés au moins une entrée de guide d'ondes supplémentaire (52) qui se trouve à une distance égale à W/2 d'une extrémité du premier petit côté.

29. Procédé selon la revendication 28, dans lequel il est mis à disposition un interféromètre multimode (69) à trois entrées de guide d'ondes (62, 65, 66), dans lequel un premier mode d'entrée (A) est réparti dans un séparateur de mode 50:50 (63) sur les deux entrées de guide d'ondes extérieures (65, 66), dans lequel la phase du mode dans l'une (66) de ces entrées de guide d'ondes extérieures (65, 66) est décalée de 180° pour les nombres K impairs et de 0° pour les nombres K pairs par rapport au mode dans l'autre (65) de ces entrées de guide d'ondes extérieures (65, 66) et dans lequel un deuxième mode d'entrée (B) est injecté par l'entrée de guide d'ondes centrale (62).

30. Procédé selon la revendication 28, dans lequel il est mis à disposition un interféromètre multimode (69) à trois entrées de guide d'ondes (75-77) dont les deux entrées de guide d'ondes extérieures (75, 76) sont reliées optiquement aux sorties de guide d'ondes d'un deuxième interféromètre multimode (73), lequel présente au moins deux entrées de guide d'ondes (71, 72) et trois sorties de guide d'ondes (75-77), dans lequel un premier mode d'entrée est injecté par une première entrée de guide d'ondes (71) et un deuxième mode d'entrée par une deuxième entrée de guide d'ondes (72) dans le deuxième interféromètre multimode (73) et dans lequel la phase du mode dans l'une (76) des entrées de guide d'ondes extérieures (75, 76) du premier interféromètre multimode (69) est décalée de 180° pour les nombres K impairs et de 0° pour les nombres K pairs par rapport au mode dans l'autre (75) de ces entrées de guide d'ondes extérieures (75, 76).

31. Procédé selon la revendication 30, dans lequel le premier (69) et le deuxième (73) interféromètres multimodes de largeur W essentiellement identique sont mis à disposition et déplacés l'un par rapport à l'autre jusqu'à ce qu'un petit côté du premier interféromètre multimode (69) coïncide avec un petit côté du deuxième interféromètres multimode (73), les entrées de guide d'ondes du premier interféromètre multimode (69) disparaissent et les deux interféromètres multimodes (69, 73) se raccordent sans délimitation mutuelle, et dans lequel les deux interféromètres multimodes (69, 73) sont tournés l'un par rapport à l'autre de telle façon que pour les nombres K impairs, la lumière qui se propage le long de premiers grands côtés des interféromètres multimodes (69, 73) est déphasée de 180° par rapport à la lumière qui se propage le long de deuxièmes grands côtés des interféromètres multimodes (69, 73).

Fig. 1

Fig. 2

Fig. 3

Fig. 4

Fig. 5

**Fig. 6**

**Fig. 7**

**Fig. 8**

Fig. 9

Fig. 10

Fig. 11

Fig. 12

Fig. 13

Fig. 14

**Fig. 15**

**Fig. 16**

**Fig. 17**

**Fig. 18**

**Fig. 19**

**Fig. 20**

**Fig. 21**

**Fig. 22**

**Fig. 23**